(19) Europäisches Patentamt / European Patent Office / Office européen des brevets

(11) EP 4 790 998 A1

(12) **EUROPEAN PATENT APPLICATION**
published in accordance with Art. 153(4) EPC

(43) Date of publication:
**12.08.2026 Bulletin 2026/33**

(21) Application number: **24874478.1**

(22) Date of filing: **19.09.2024**

(51) International Patent Classification (IPC):
***H04N 19/597*** (2014.01) ***G06T 9/00*** (2006.01)
***H04N 19/46*** (2014.01) ***H04N 19/85*** (2014.01)

(52) Cooperative Patent Classification (CPC):
**G06T 9/00; H04N 19/46; H04N 19/597; H04N 19/85**

(86) International application number:
**PCT/JP2024/033413**

(87) International publication number:
**WO 2025/074869 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023 JP 2023174146**

(71) Applicant: **Sony Group Corporation**
**Tokyo 108-0075 (JP)**

(72) Inventors:
- **HAYASHI Kao**
  **Tokyo 108-0075 (JP)**
- **KUMA Satoru**
  **Tokyo 108-0075 (JP)**
- **KATO Tsuyoshi**
  **Tokyo 108-0075 (JP)**
- **NAGANUMA Tomoya**
  **Tokyo 108-0075 (JP)**

(74) Representative: **D Young & Co LLP**
**3 Noble Street**
**London EC2V 7BQ (GB)**

(54) **INFORMATION PROCESSING DEVICE AND METHOD**

(57) The present disclosure relates to an information processing device and a method capable of suppressing a decrease in the encoding efficiency for 3D data including a base mesh and a displacement vector, in a case of applying an unfolding method involving transmission of patch information. A base mesh is unfolded into a two-dimensional region using a first unfolding method involving transmission of patch information, a local region of the base mesh is unfolded into a two-dimensional region using a second unfolding method different from the first unfolding method, patch information for the base mesh unfolded using the first unfolding method and meta information for the local region generated using the second unfolding method are generated as Atlas information, and texture is mapped using the patch information and the meta information to generate an attribute map. The present disclosure can be applied to, for example, an information processing device, an electronic apparatus, an information processing method, a program, or the like.

Fig. 13

151
150
(u0, v0)
(u1, v1)
(u2, v2)



Processed by Luminess, 75001 PARIS (FR)

## Description

Technical Field

The present disclosure relates to an information processing device and a method, and more particularly, to an information processing device and a method capable of suppressing a decrease in the encoding efficiency for 3D data including a base mesh and a displacement vector, in a case of applying an unfolding method involving transmission of patch information.

Background Art

Video-based Dynamic Mesh Coding (V-DMC) is known as an encoding method for meshes, which are 3D data that represent a three-dimensional structure of an object using vertices and connections (see, for example, NPL 1). As a UV coordinate generation method (UV unfolding method) in the V-DMC, orthoAtlas has been proposed in addition to UVAtlas (for example, see NPL 2 to NPL 4). Note that orthoAtlas is an unfolding method involving the transmission of patch information.

Citation List

[Non Patent Literature]

NPL 1: Khaled Mammou, Jungsun Kim, Alexis Tourapis, Dimitri Podborski, Krasimir Kolarov, "[V-CG] Apple's Dynamic Mesh Coding CfP Response", ISO/IEC JTC 1/SC 29/WG 7 m59281, April 2022

NPL 2: Danillo B Graziosi, Alexandre Zaghetto, Ali Tabatabai, "[VDMC-NEW] orthoAtlas: a new texture mapping proposal for V-DMC", ISO/IEC JTC1/SC29/WG7 m60982, Mainz, DE - October 2022

NPL 3: Danillo Bracco Graziosi, Alexandre Zaghetto, Ali Tabatabai, "[V-DMC EE4.8 related] Optimization of orthoAtlas parameters", SO/IEC JTC1/SC29/WG7 m62560, Antalya - April 2023

NPL 4: Kao Hayashi, Satoru Kuma, Danillo Bracco Graziosi, Ohji Nakagami, "[V-DMC] [EE4. 8-related] Improvement of inter coding performance for orthoAtlas", ISO/IEC JTC1/SC29/WG7 m64125, Geneva - July 2023


Summary

Technical Problem

Unfortunately, in the case of orthoAtlas, the encoding efficiency may be compromised as compared with the case of UVAtlas.

The present disclosure is made in view of such a situation, and enables suppression of a decrease in the encoding efficiency for 3D data including a base mesh and a displacement vector, in a case of applying an unfolding method involving transmission of patch information.

Solution to Problem

An information processing device according to one aspect of the present technology includes: an Atlas information generation unit configured to unfold a base mesh into a two-dimensional region using a first unfolding method involving transmission of patch information, unfold a local region of the base mesh into a two-dimensional region using a second unfolding method different from the first unfolding method, and generate, as Atlas information, the patch information for the base mesh unfolded using the first unfolding method and meta information for the local region generated using the second unfolding method; an Atlas information encoding unit configured to encode the Atlas information including the patch information and the meta information generated; an attribute map generation unit configured to generate an attribute map by mapping a projection image of a texture corresponding to the base mesh to a two-dimensional region so as to correspond to the first unfolding method using the patch information generated and mapping the texture corresponding to the local region to a two-dimensional region so as to correspond to the second unfolding method using the meta information generated; an attribute video encoding unit configured to encode an attribute video having the attribute map generated serving as a frame image; and a bitstream generation unit configured to generate a bitstream including encoded data of the base mesh, encoded data of a displacement video, encoded data of the attribute video, and encoded data of the Atlas information, wherein the base mesh is a mesh generated by decimating vertices from

an original mesh to be encoded including the vertices and connections expressing a three-dimensional structure of an object, and having a lower definition than the original, the displacement video is a moving image having a displacement map serving as a frame image, the displacement map being a two-dimensional region in which displacement vectors indicating displacement of division points that are vertices generated by subdividing the base mesh are packed, the Atlas information is information used for mesh reconstruction and includes information indicating correspondence between the base mesh, and the displacement map and the attribute map, and the patch information is information relating to mapping of a patch of the projection image of the texture.

An information processing method according to one aspect of the present technology includes: unfolding a base mesh into a two-dimensional region using a first unfolding method involving transmission of patch information, unfolding a local region of the base mesh into a two-dimensional region using a second unfolding method different from the first unfolding method, and generating, as Atlas information, the patch information for the base mesh unfolded using the first unfolding method and meta information for the local region generated using the second unfolding method; encoding the Atlas information including the patch information and the meta information generated; generating an attribute map by mapping a projection image of a texture corresponding to the base mesh to a two-dimensional region so as to correspond to the first unfolding method using the patch information generated and mapping the texture corresponding to the local region to a two-dimensional region so as to correspond to the second unfolding method using the meta information generated; encoding an attribute video having the attribute map generated serving as a frame image; and generating a bitstream including encoded data of the base mesh, encoded data of a displacement video, encoded data of the attribute video, and encoded data of the Atlas information, wherein the base mesh is a mesh generated by decimating vertices from an original mesh to be encoded including the vertices and connections expressing a three-dimensional structure of an object, and having a lower definition than the original, the displacement video is a moving image having a displacement map serving as a frame image, the displacement map being a two-dimensional region in which displacement vectors indicating displacement of division points that are vertices generated by subdividing the base mesh are packed, the Atlas information is information used for mesh reconstruction and includes information indicating correspondence between the base mesh, and the displacement map and the attribute map, and the patch information is information relating to mapping of a patch of the projection image of the texture.

An information processing device according to another aspect of the present technology includes: a demultiplexing unit configured to demultiplex a bitstream to extract encoded data of a base mesh, encoded data of a displacement video, encoded data of an attribute video, and encoded data of Atlas information; an Atlas information decoding unit configured to decode the extracted encoded data of the Atlas information to generate the Atlas information corresponding to a first unfolding method involving transmission of patch information and a second unfolding method different from the first unfolding method and including the patch information for the base mesh unfolded using the first unfolding method and meta information for a local region of the base mesh unfolded using the second unfolding method; a base mesh decoding unit configured to decode the extracted encoded data of the base mesh to generate information on the base mesh; a base mesh reconstruction unit configured to reconstruct the base mesh from the information on the base mesh using the Atlas information; an attribute video decoding unit configured to decode the encoded data of the attribute video to generate an attribute map configured as a frame image of the attribute video; and a display processing unit configured to generate a display image by extracting a projection image of a texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to a decoding mesh to perform rendering, wherein the base mesh is a mesh generated by decimating vertices from an original mesh to be encoded including the vertices and connections expressing a three-dimensional structure of an object, and having a lower definition than the original, the displacement video is a moving image having a displacement map serving as a frame image, the displacement map being a two-dimensional region in which displacement vectors indicating displacement of division points that are vertices generated by subdividing the base mesh are packed, the Atlas information is information used for mesh reconstruction and includes information indicating correspondence between the base mesh, and the displacement map and the attribute map, the patch information is information relating to mapping of a patch of the projection image of the texture, and the decoding mesh is generated by applying the displacement vector derived from the encoded data of the displacement video to the base mesh reconstructed.

An information processing method according to another aspect of the present technology includes: demultiplexing a bitstream to extract encoded data of a base mesh, encoded data of a displacement video, encoded data of an attribute video, and encoded data of Atlas information; decoding the extracted encoded data of the Atlas information to generate the Atlas information corresponding to a first unfolding method involving transmission of patch information and a second unfolding method different from the first unfolding method and including the patch information for the base mesh unfolded using the first unfolding method and meta information for a local region of the base mesh unfolded using the second unfolding method; decoding the extracted encoded data of the base mesh to generate information on the base mesh; reconstructing the base mesh from the information on the base mesh using the Atlas information; decoding the encoded

data of the attribute video to generate an attribute map configured as a frame image of the attribute video; and generating a display image by extracting a projection image of a texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to a decoding mesh to perform rendering, wherein the base mesh is a mesh generated by decimating vertices from an original mesh to be encoded including the vertices and connections expressing a three-dimensional structure of an object, and having a lower definition than the original, the displacement video is a moving image having a displacement map serving as a frame image, the displacement map being a two-dimensional region in which displacement vectors indicating displacement of division points that are vertices generated by subdividing the base mesh are packed, the Atlas information is information used for mesh reconstruction and includes information indicating correspondence between the base mesh, and the displacement map and the attribute map, the patch information is information relating to mapping of a patch of the projection image of the texture, and the decoding mesh is generated by applying the displacement vector derived from the encoded data of the displacement video to the base mesh reconstructed.

With the information processing device and method according to one aspect of the present technology, the base mesh is unfolded into the two-dimensional region using the first unfolding method involving transmission of the patch information, the local region of the base mesh is unfolded into the two-dimensional region using the second unfolding method different from the first unfolding method, the patch information for the base mesh unfolded using the first unfolding method and the meta information for the local region generated using the second unfolding method are generated as the Atlas information, the Atlas information including the patch information and the meta information generated is encoded, the attribute map is generated by mapping the projection image of the texture corresponding to the base mesh to the two-dimensional region so as to correspond to the first unfolding method using the patch information generated and mapping the texture corresponding to the local region to the two-dimensional region so as to correspond to the second unfolding method using the meta information generated, the attribute video having the attribute map generated serving as the frame image is encoded, and the bitstream including the encoded data of the base mesh, the encoded data of the displacement video, the encoded data of the attribute video, and the encoded data of the Atlas information is generated.

With the information processing device and method according to another aspect of the present technology, the bitstream is demultiplexed to extract the encoded data of the base mesh, the encoded data of the displacement video, the encoded data of the attribute video, and the encoded data of the Atlas information, the extracted encoded data of the Atlas information is decoded to generate the Atlas information corresponding to the first unfolding method involving transmission of the patch information and the second unfolding method different from the first unfolding method and including the patch information for the base mesh unfolded using the first unfolding method and the meta information for the local region of the base mesh unfolded using the second unfolding method, the extracted encoded data of the base mesh is decoded to generate the information on the base mesh, the base mesh is reconstructed from the information on the base mesh using the Atlas information, the encoded data of the attribute video is decoded to generate the attribute map configured as the frame image of the attribute video, the projection image of the texture corresponding to the base mesh mapped to the attribute map so as to correspond to the first unfolding method is extracted using the patch information included in the Atlas information, the texture corresponding to the local region mapped to the attribute map so as to correspond to the second unfolding method is extracted using the meta information included in the Atlas information, the projection image and the texture extracted are applied to the decoding mesh to perform rendering to generate the display image.

## Brief Description of Drawings

[Fig. 1]

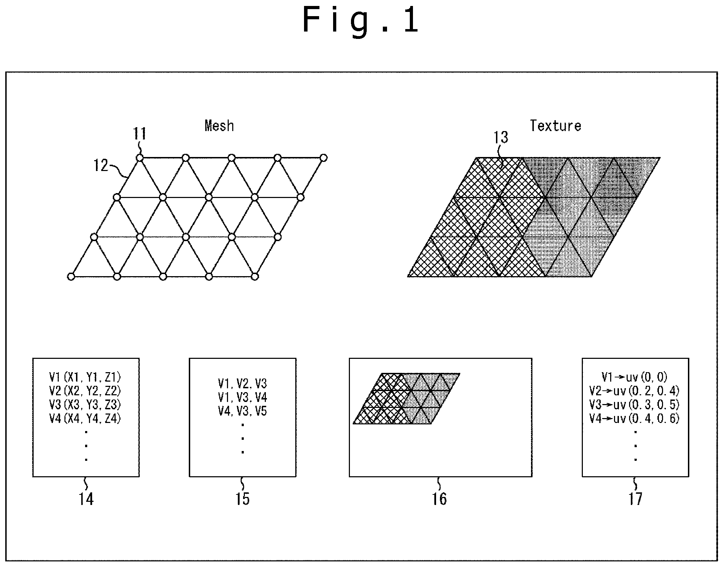

Fig. 1 is a diagram for describing a mesh.
[Fig. 2]

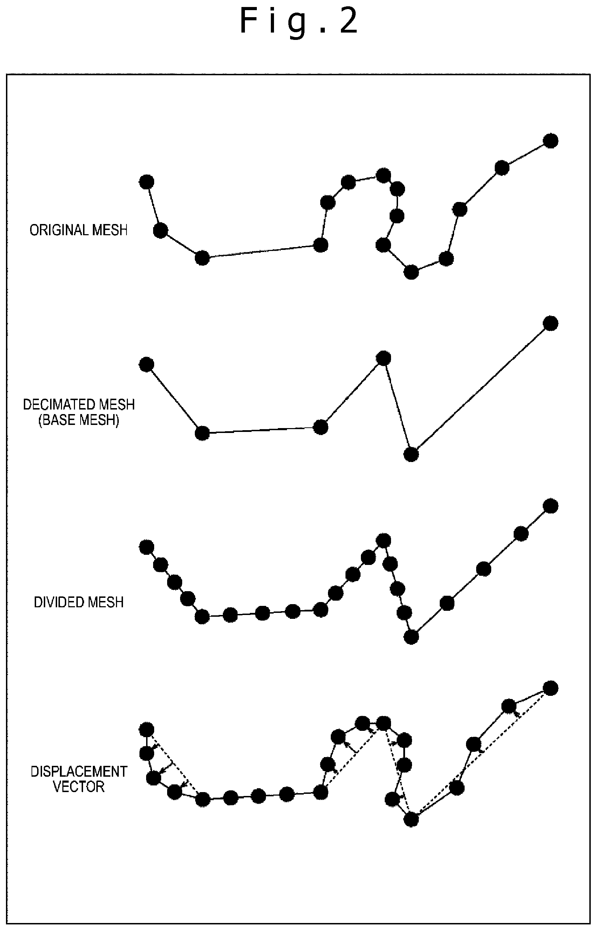

Fig. 2 is a diagram for describing V-DMC.
[Fig. 3]

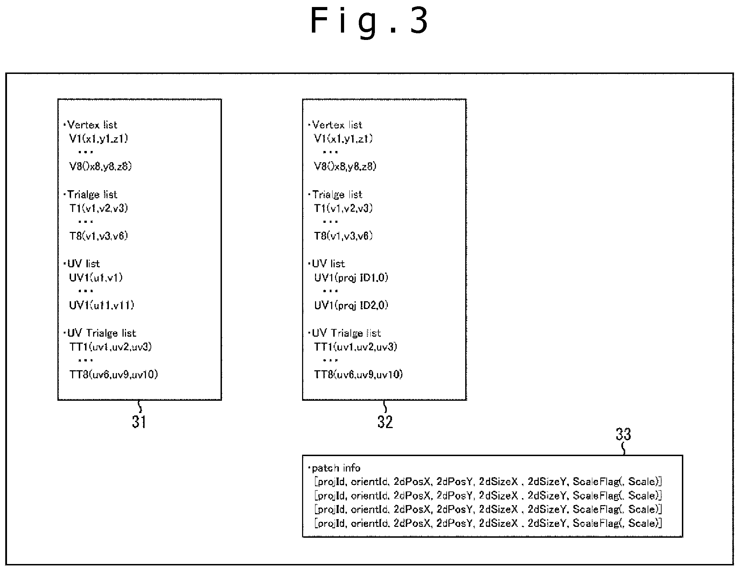

Fig. 3 is a diagram illustrating an example of transmitted information.
[Fig. 4]

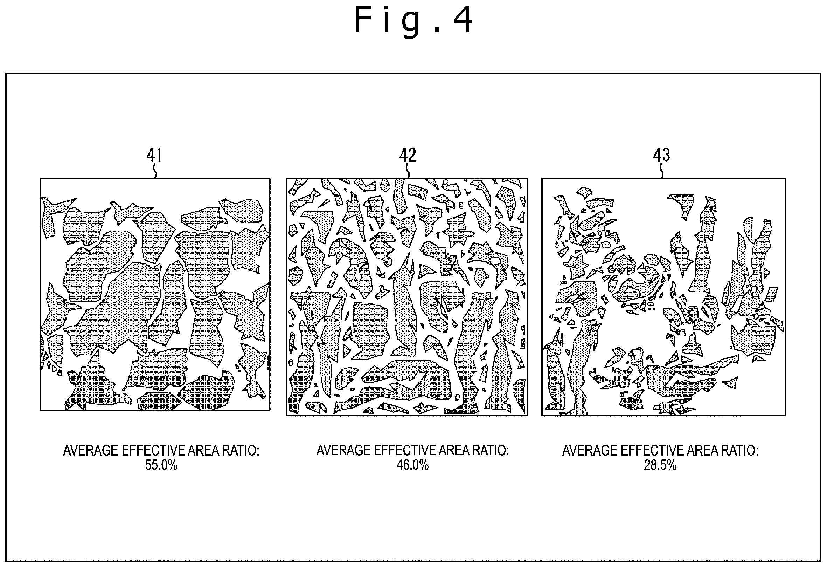

Fig. 4 is a diagram illustrating an example of an attribute map.
[Fig. 5]

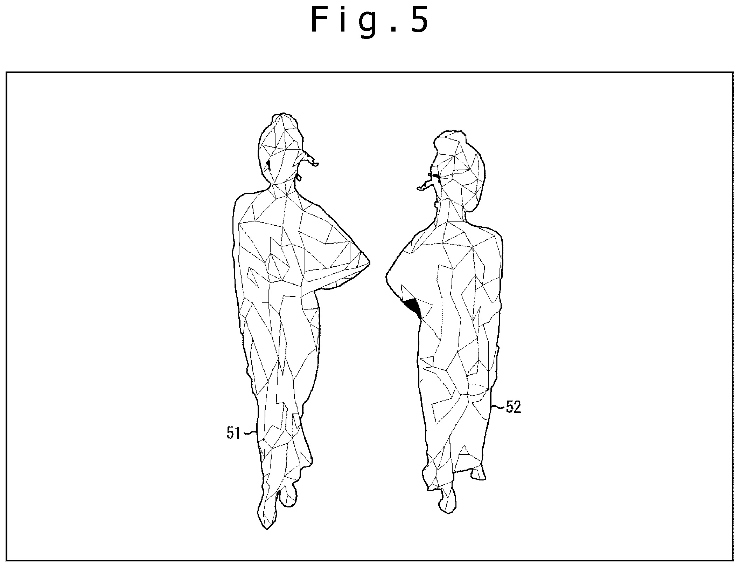

Fig. 5 is a diagram illustrating an example of texture resolution evaluation.
[Fig. 6]

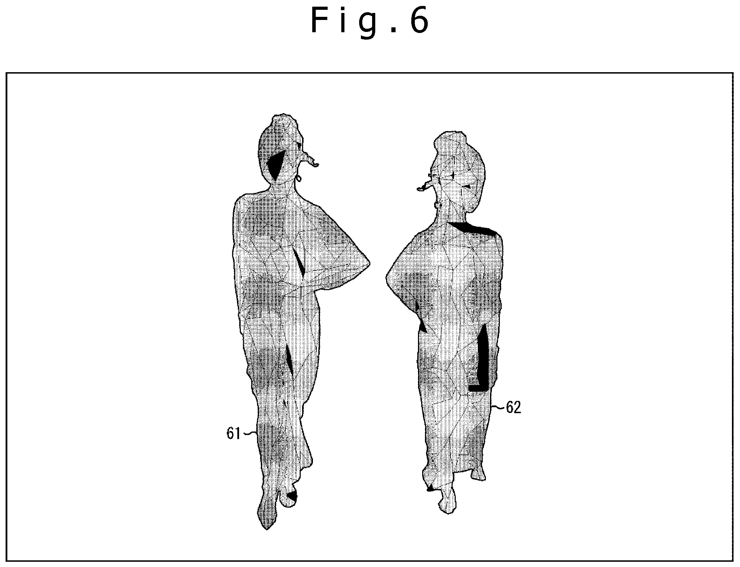

Fig. 6 is a diagram illustrating an example of texture resolution evaluation.
[Fig. 7]

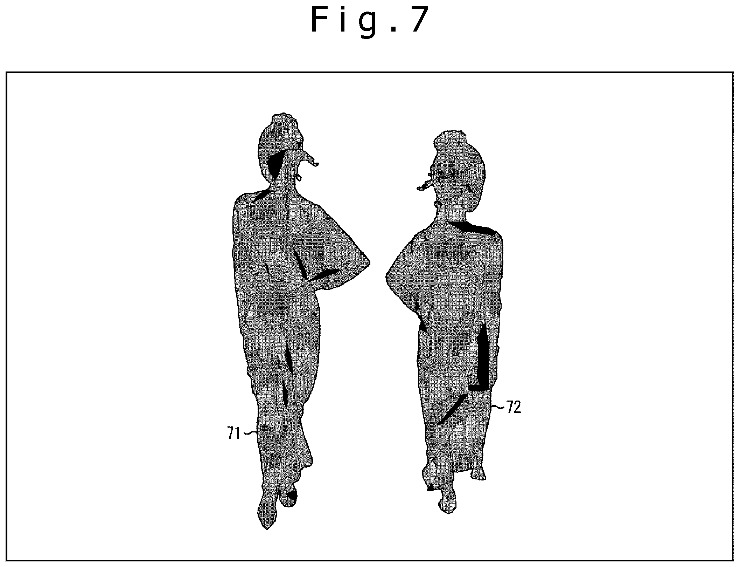

Fig. 7 is a diagram illustrating an example of texture resolution evaluation.
[Fig. 8]

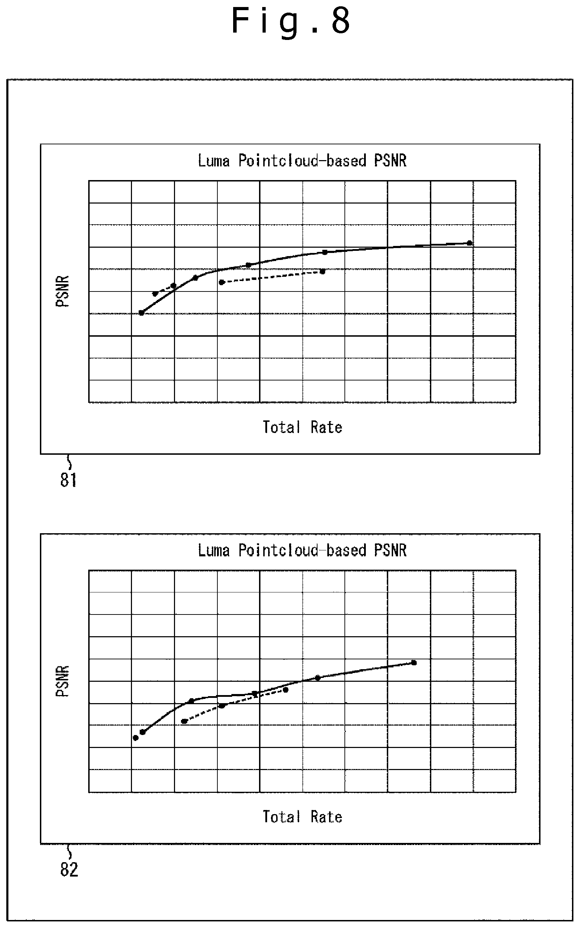

Fig. 8 is a diagram illustrating an example of PSNR comparison.
[Fig. 9]

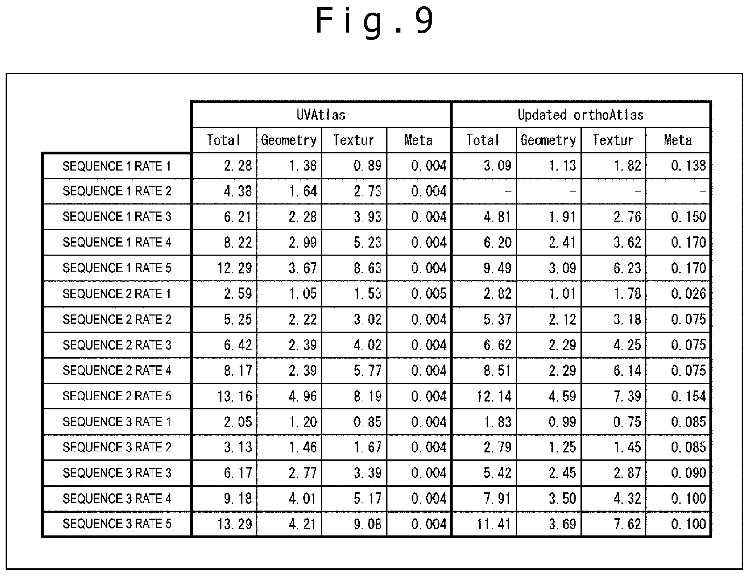

Fig. 9 is a diagram illustrating an example of bit rate comparison.
[Fig. 10]

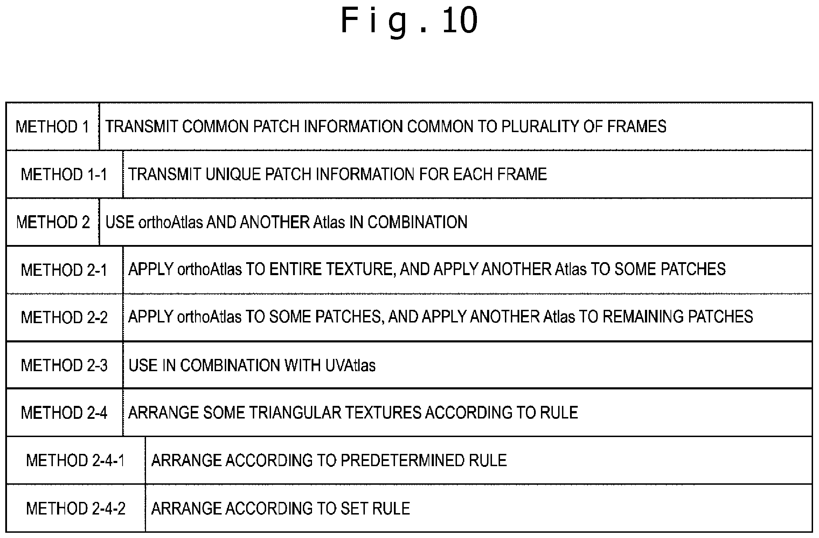

Fig. 10 is a diagram illustrating an example of an unfolding method.
[Fig. 11]

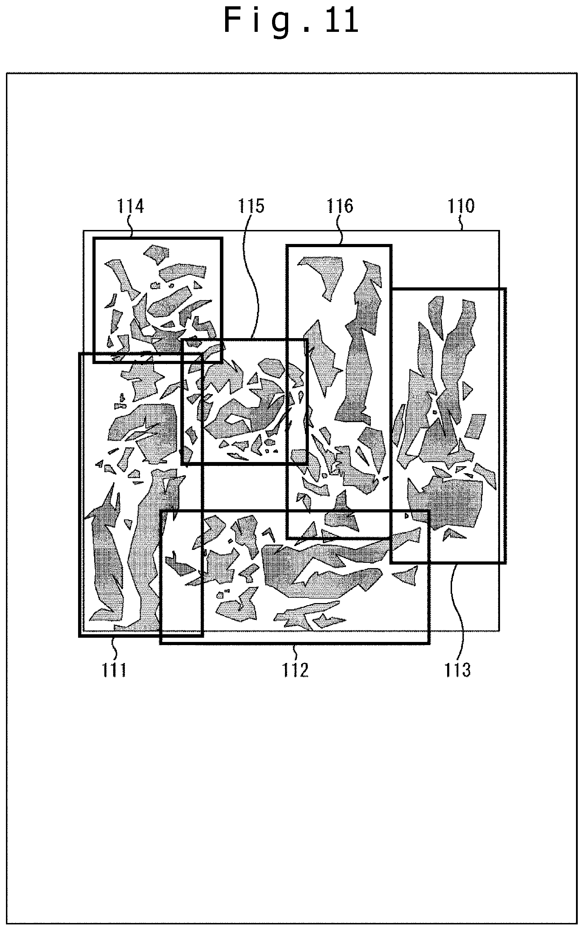

Fig. 11 is a diagram illustrating an example of a large patch.
[Fig. 12]

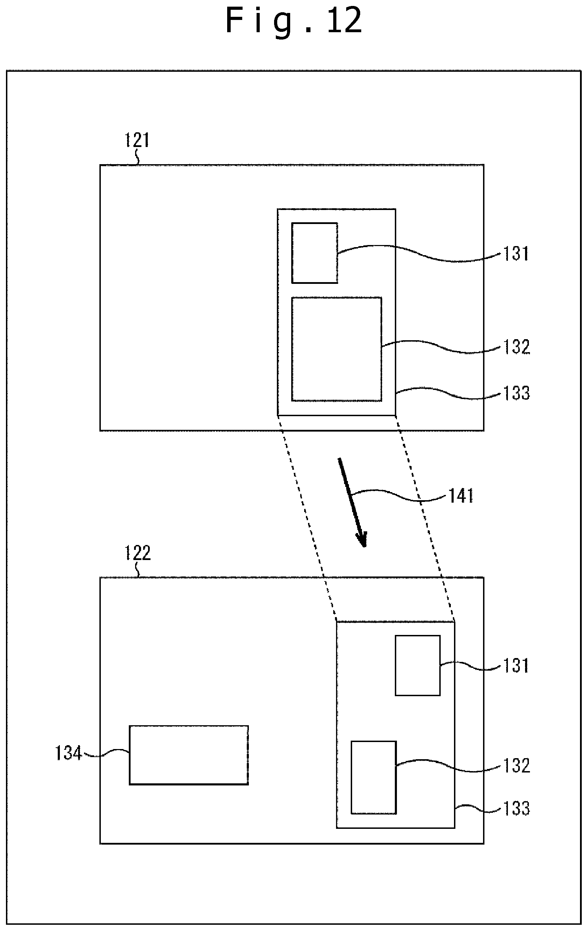

Fig. 12 is a diagram illustrating an example of patch information.
[Fig. 13]

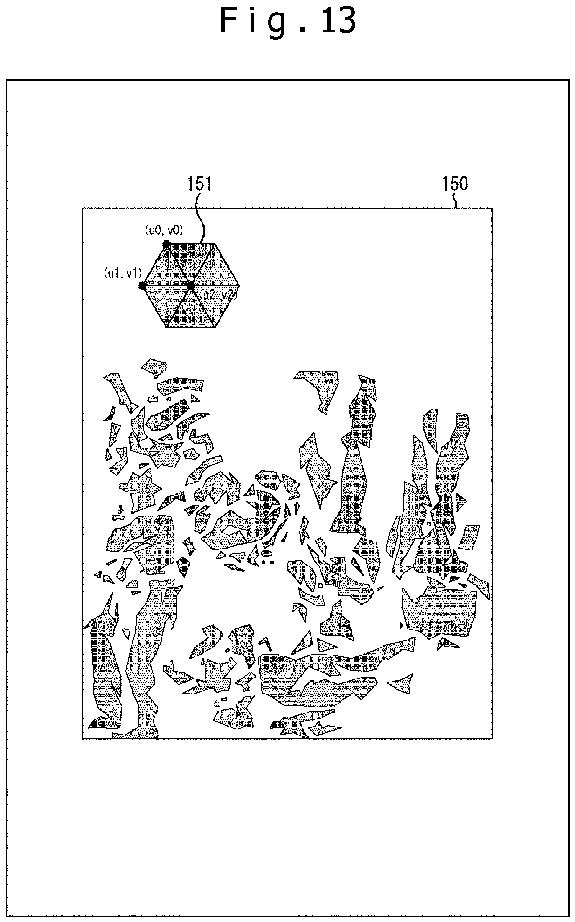

Fig. 13 is a diagram illustrating an example of an attribute map.
[Fig. 14]

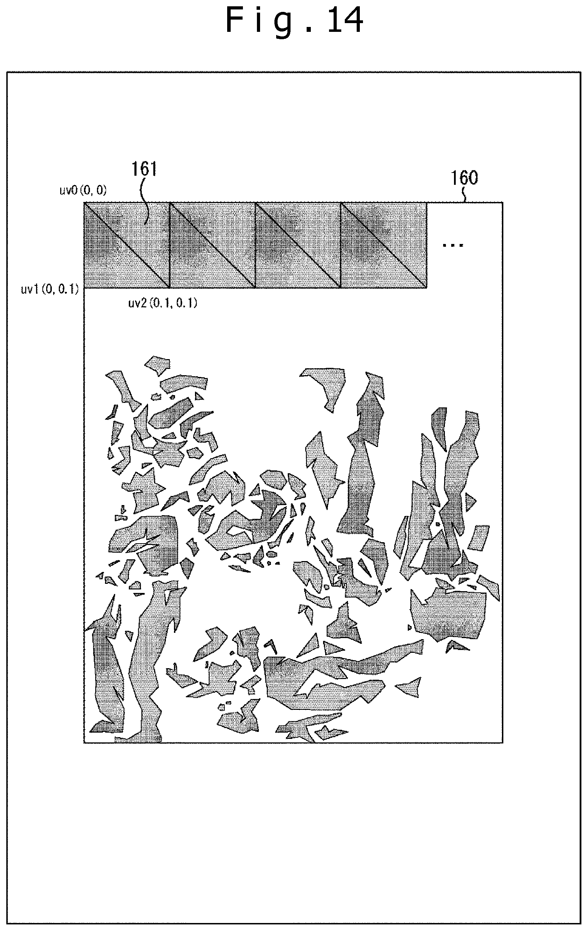

Fig. 14 is a diagram illustrating an example of an attribute map.
[Fig. 15]

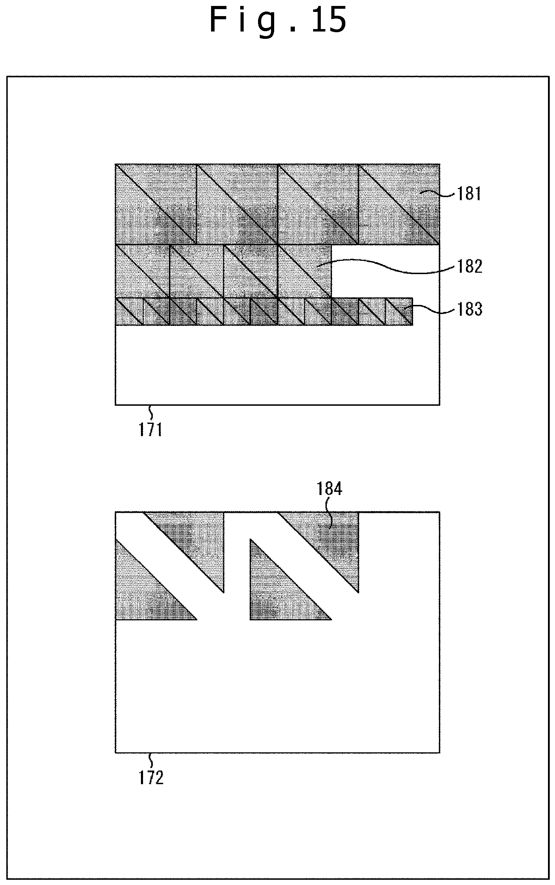

Fig. 15 is a diagram illustrating an example of how a texture is mapped.
[Fig. 16]

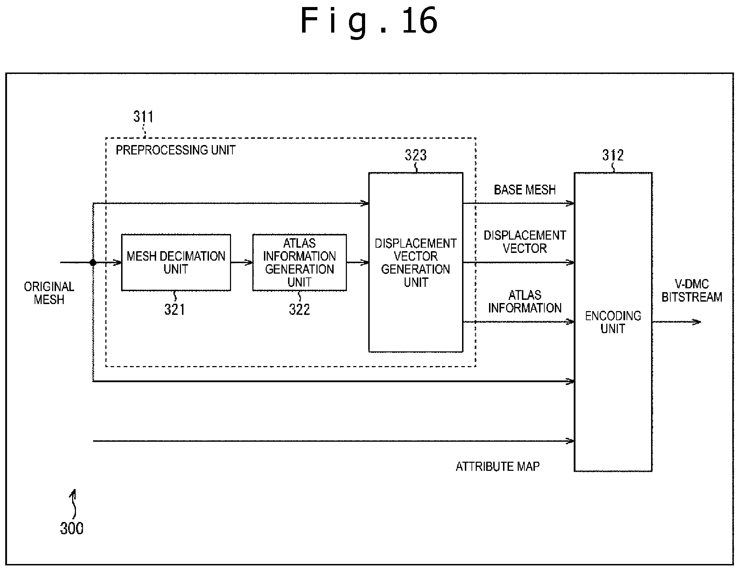

Fig. 16 is a block diagram illustrating an example of the main configuration of an encoding device.
[Fig. 17]

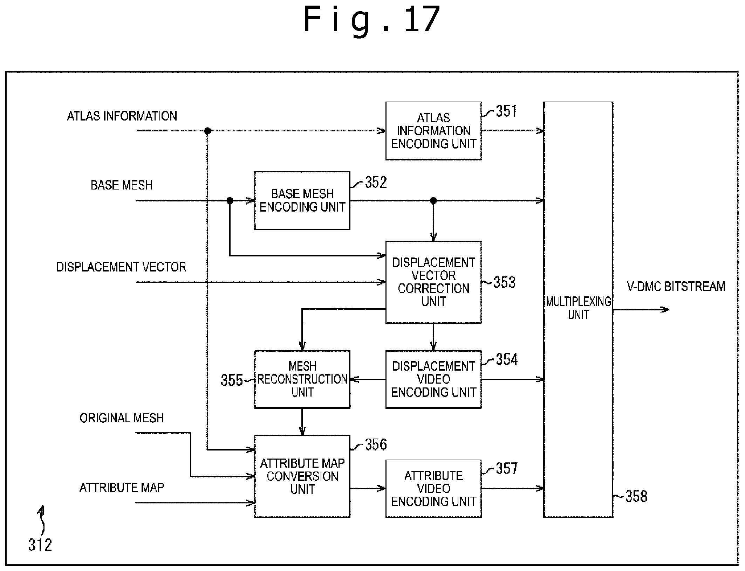

Fig. 17 is a block diagram illustrating an example of the main configuration of an encoding unit.
[Fig. 18]

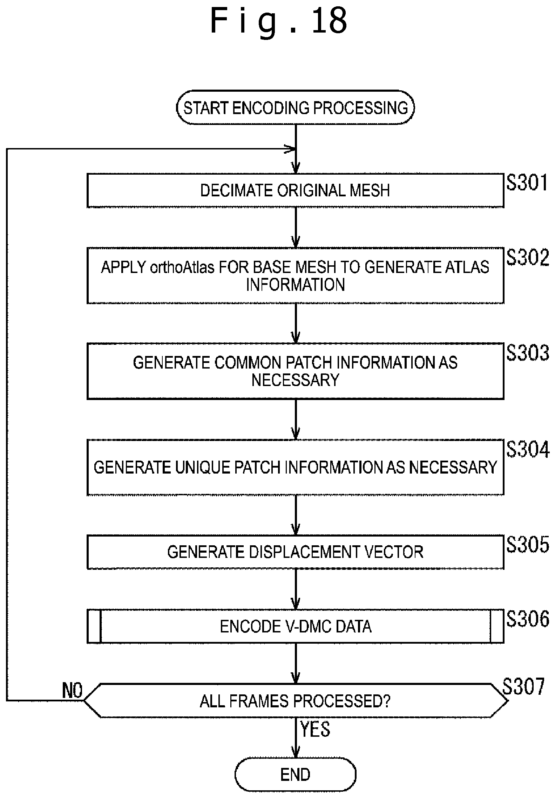

Fig. 18 is a flowchart for describing an example of the flow of encoding processing.
[Fig. 19]

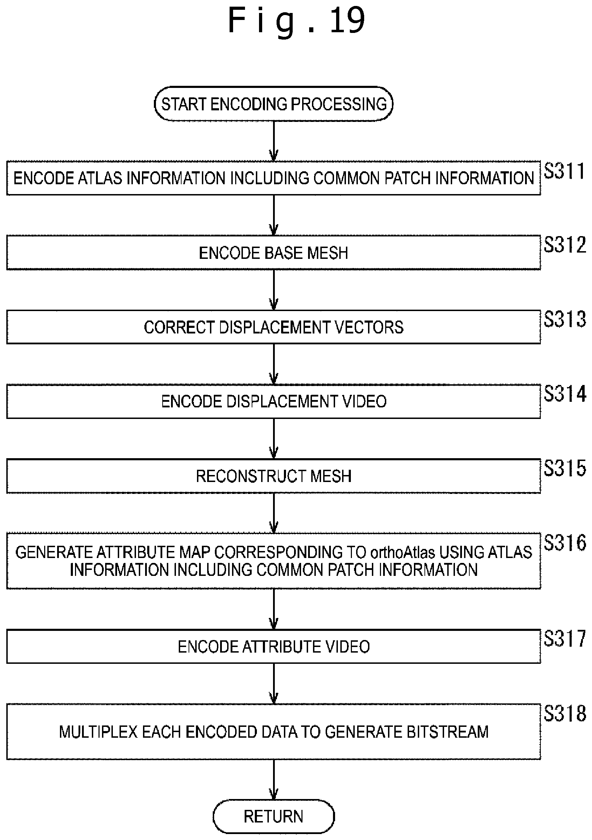

Fig. 19 is a flowchart for describing an example of the flow of encoding processing.
[Fig. 20]

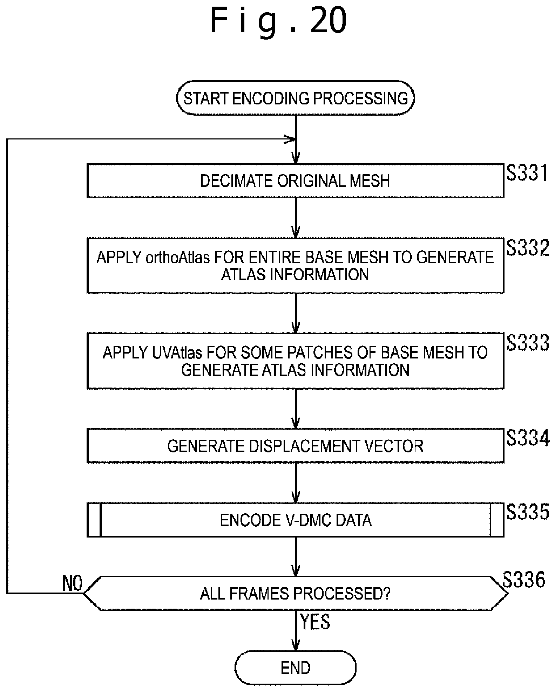

Fig. 20 is a flowchart for describing an example of the flow of encoding processing.
[Fig. 21]

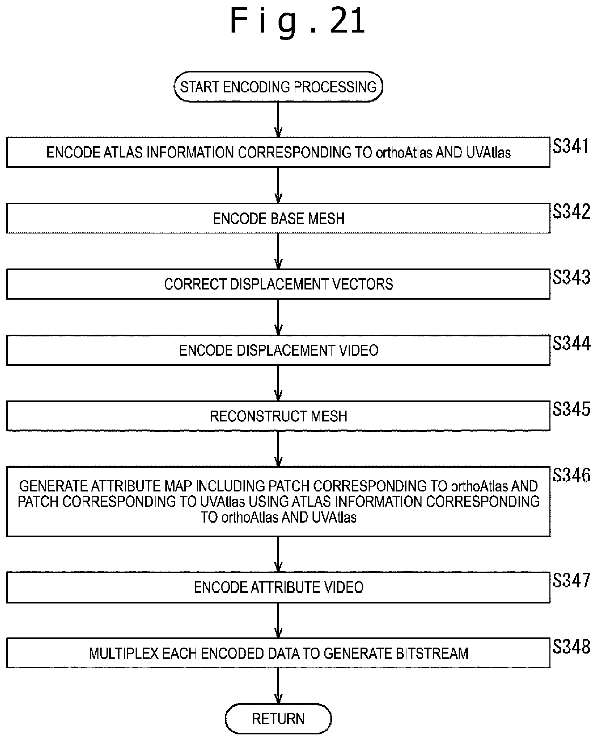

Fig. 21 is a flowchart for describing an example of the flow of encoding processing.
[Fig. 22]

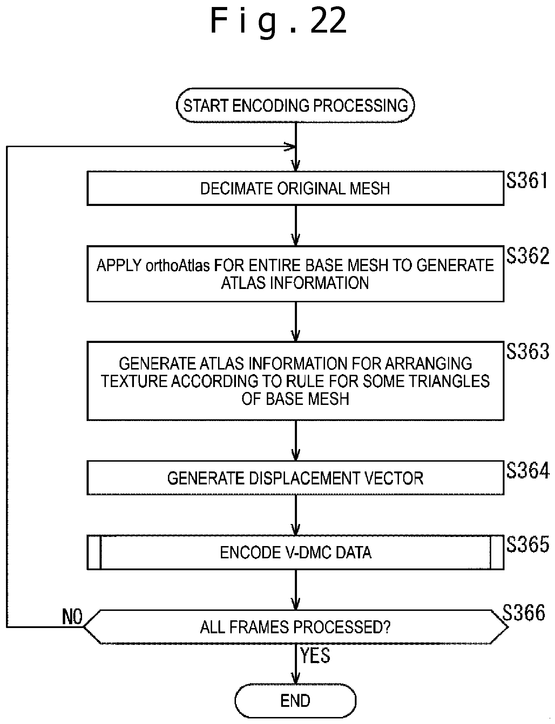

Fig. 22 is a flowchart for describing an example of the flow of encoding processing.
[Fig. 23]

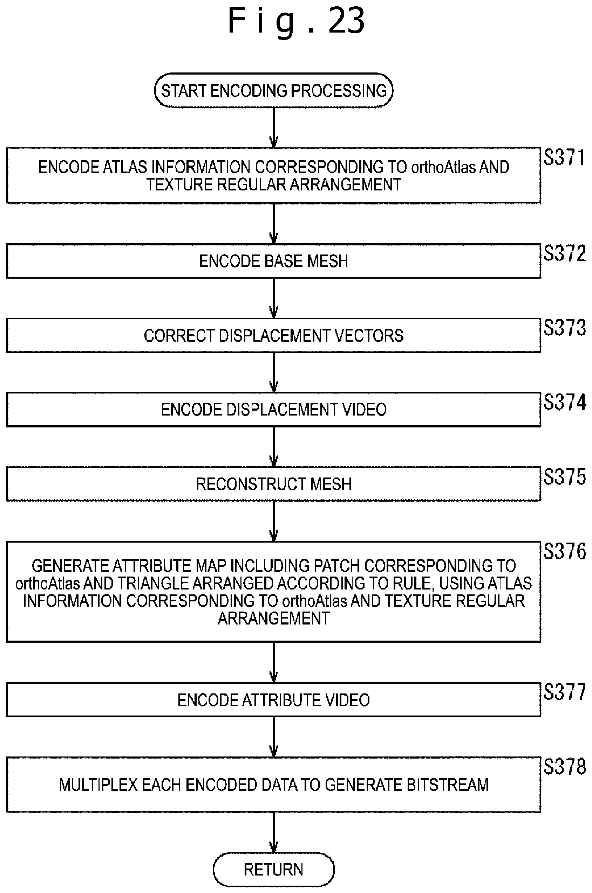

Fig. 23 is a flowchart for describing an example of the flow of encoding processing.
[Fig. 24]

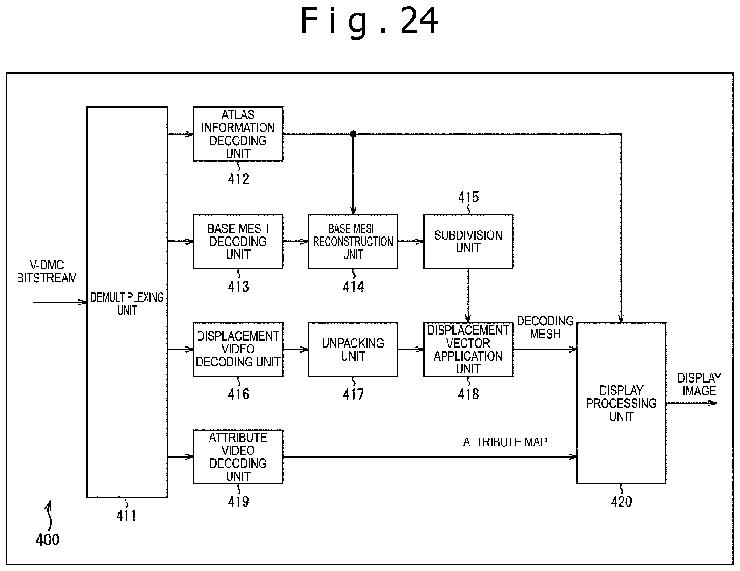

Fig. 24 is a block diagram illustrating an example of the main configuration of a decoding device.
[Fig. 25]

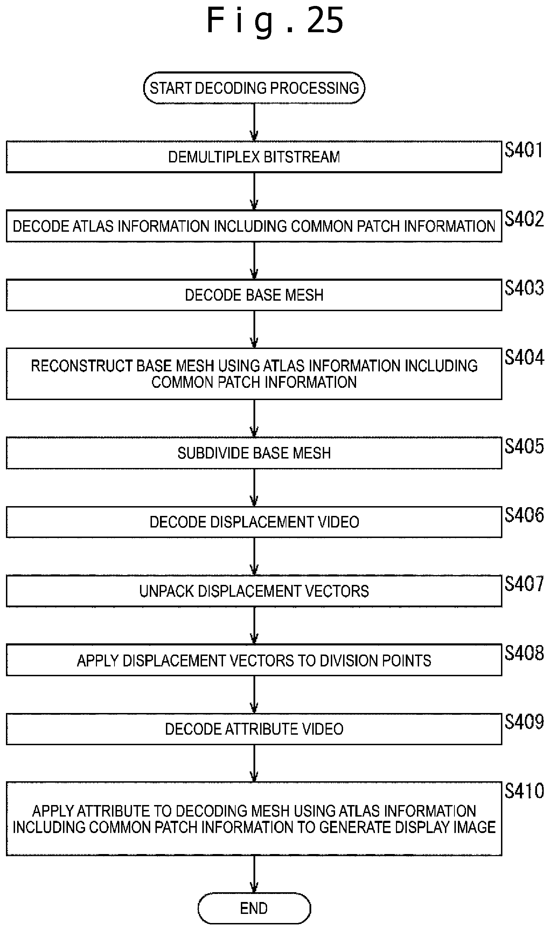

Fig. 25 is a flowchart for describing an example of the flow of decoding processing.
[Fig. 26]

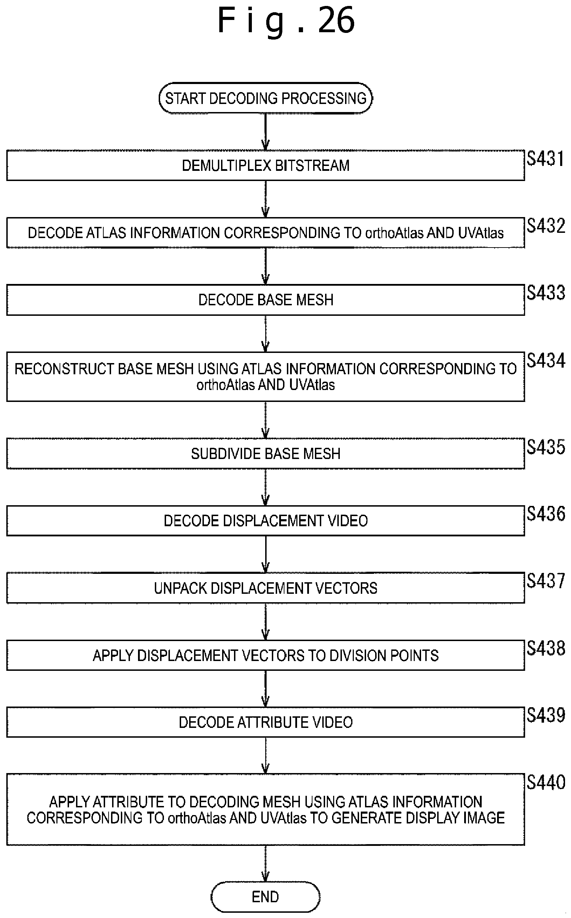

Fig. 26 is a flowchart for describing an example of the flow of decoding processing.
[Fig. 27]

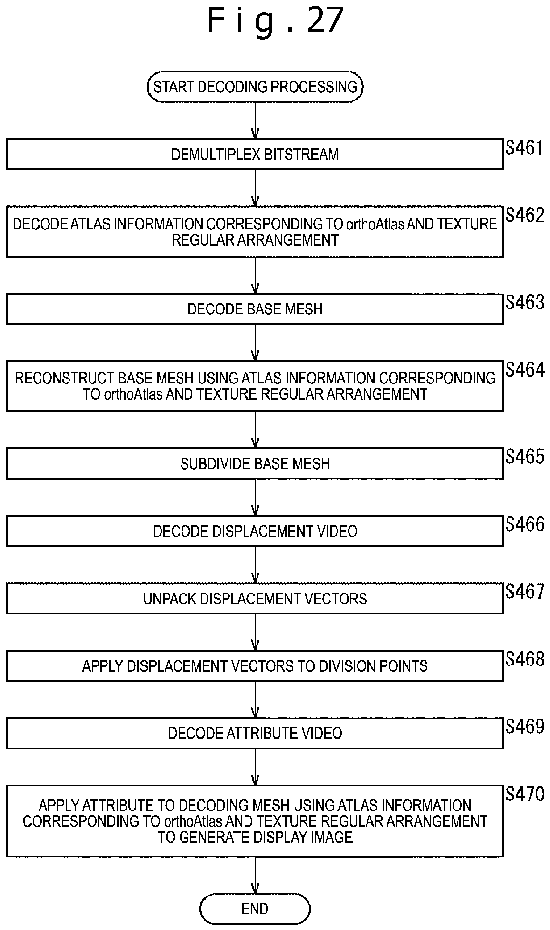

Fig. 27 is a flowchart for describing an example of the flow of decoding processing.
[Fig. 28]

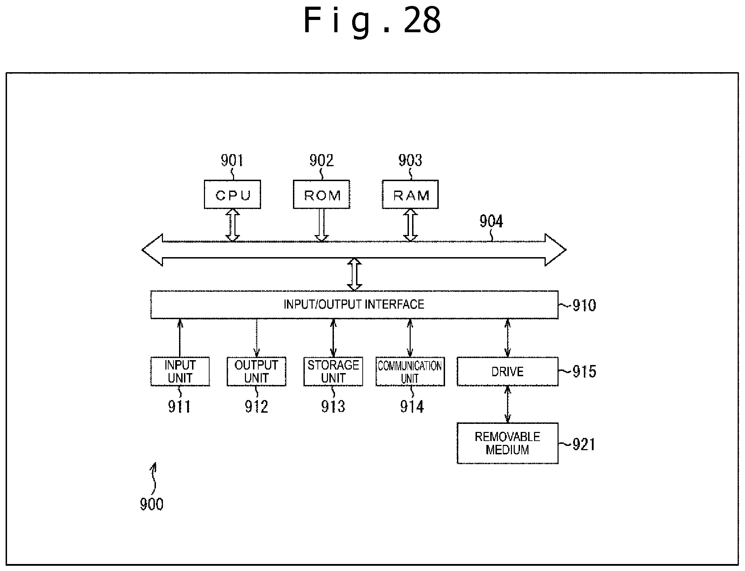

Fig. 28 is a block diagram illustrating an example of the main configuration of a computer.

## Description of Embodiments

Hereinafter, modes for carrying out the present disclosure (hereinafter, referred to as "embodiments") will be described. The descriptions will be given in the following order.

1. Literature Supporting Technical Content, Technical Terms, and the Like
2. UV Coordinate Generation Method
3. Improvement in UV Coordinate Generation Method
4. First Embodiment (Encoding Device)
5. Second Embodiment (Decoding Device)
6. Supplementary Notes

1. Literature Supporting Technical Content, Technical Terms, and the Like

The scope disclosed in the present technology includes not only the content described in the embodiments but also the content described in the following non-patent literature and the like known at the time of filing, the content of other documents referred to in the following non-patent literature, and the like.

NPL 1: (described above)
NPL 2: (described above)
NPL 3: (described above)
NPL 4: (described above)

That is, the content described in the above-described non-patent literature as well as the content of other literature referred to in the above-described non-patent literature and the like also serve as a basis for determining whether the support requirement is met.

2. UV Coordinate Generation Method

V-DMC

As 3D data representing a three-dimensional structure of a solid structure (an object having a three-dimensional shape), a mesh is known. The mesh represents a three-dimensional shape of an object surface by forming polygons using vertices and connections (also referred to as edges).

As illustrated in an upper left side of Fig. 1, in a mesh, vertices 11 and connections 12 connecting the vertices 11 form polygonal planes (polygons). These polygons (also referred to as faces) represent the surface of the object having a three-dimensional structure, that is, the three-dimensional shape of the object. Note that a texture 13 can be attached to each face of the mesh.

Mesh data includes information, for example, as illustrated in a lower part of Fig. 1. Vertex information 14, illustrated first from the left in the lower part of Fig. 1, is information that indicates three-dimensional positions (three-dimensional coordinates (X,Y,Z)) of each of the vertices 11 that are contained in the mesh. Connection information 15, illustrated second from the left in the lower part of Fig. 1, is information that indicates each of the connections (edges) 12 that are contained in the mesh. A texture image 16, illustrated third from the left in the lower part of Fig. 1, is map information of the textures 13 attached to each of the faces. A UV map 17, illustrated fourth from the left in the lower part of Fig. 1, is information that indicates correspondence between the vertices 11 and the textures 13. In the UV map 17, coordinates (UV coordinates) of each of the vertices 11 in the texture image 16 are shown.

As an encoding method for such a mesh, there is, for example, Video-based Dynamic Mesh Coding (V-DMC) as described in NPL 1.

In V-DMC, a mesh to be encoded (referred to as an original mesh in this specification) is represented by a base mesh having a lower definition than the original mesh (and thus is coarse) and displacement vectors of division points obtained by subdividing the base mesh, and the base mesh and the displacement vectors are encoded.

For example, it is assumed that there is an original mesh as illustrated in the top row of Fig. 2. The original mesh is a mesh constituted by vertices and connections representing the three-dimensional structure of an object, and is a target to be encoded. For example, the original mesh is generated from a captured image of an object in real space (by camera capture). The original mesh is mesh data (also referred to as a dynamic mesh) in which the structure changes among frames (non-registered). In Fig. 2, black dots represent vertices, and lines connecting the black dots represent connections (edges). As described above, a mesh essentially forms polygons by vertices and edges, but for the sake of convenience, the mesh is described here as a group of vertices connected linearly (in series).

By decimating some vertices of the original mesh, a coarse (low definition) mesh as illustrated in the second row from the top of Fig. 2 is formed. This is referred to as a base mesh. Thus, the base mesh may be a mesh that is generated by decimating vertices from the original mesh and has a lower definition than the original mesh.

By subdividing each polygon of the base mesh, vertices and edges are added as illustrated in the third row from the top of Fig. 2. The degree of this subdivision is arbitrary. That is, the number of vertices and the number of edges to be added are arbitrary. For example, the processing of adding a vertex to the midpoint of an edge may be repeated recursively. Here, the number of vertices added by this subdivision may be equal to the number of vertices decimated from the original mesh, for example. That is, the number of vertices can be made equal to that of the original mesh by the subdivision. In this specification, these added vertices are also referred to as division points.

However, since the connections are updated when the vertices of the original mesh are decimated, and the division points are formed on the updated connections (edges), the shape of the subdivided base mesh is different from the shape of the original mesh. More specifically, as illustrated in the bottom row in Fig. 2, the positions of the division points (on

the dotted line) are different from those of the original mesh.

Therefore, for example, by moving the position of a division point so as to approach a vertex position of the original mesh, the difference in shape from the original mesh can be reduced. In this specification, such movement of the division points is also referred to as displacement. Further, the amount of movement and the direction of movement of the displacement indicated as a vector are referred to as a displacement vector. For example, ideally, the shape of the subdivided base mesh can be matched with the shape of the original mesh by displacing the division points. Thus, the original mesh can be expressed with the base mesh and the displacement vector.

With V-DMC, such a base mesh and displacement vectors are encoded instead of the original mesh. More specifically, the base mesh is encoded using existing mesh encoding methods, such as Draco, for example. In addition, the displacement vector is packed in a two-dimensional region (also referred to as a displacement map), and is encoded as a displacement video having the displacement map serving as a frame image by using an encoding method for 2D moving images. The projection image of the texture is arranged (mapped) to a two-dimensional region (also referred to as an attribute map). The attribute video having the attribute map serving as the frame image is encoded using an encoding method for 2D moving images. Atlas information used in reconstructing a mesh is encoded using a predetermined encoding method. The Atlas information may include, for example, correspondence (such as a UV map) between the base mesh and the displacement map or the attribute map, a quantized value of the displacement vector, and the like.

By thus encoding the base mesh and the displacement vector, it is possible to perform encoding in a state where the number of polygons (that is, the number of vertices or the number of edges) is reduced compared to a case where the original mesh is encoded, and thus, in general, it is possible to achieve the same quality with a reduced code amount. Thus, the encoding efficiency can be improved.

At the time of decoding, each bitstream is decoded using a decoding method corresponding to the encoding method, and various types of information such as the base mesh, the displacement vector, the texture, and the Atlas information is restored (generated). The original mesh is restored (generated) with the base mesh subdivided and with the displacement vector applied to each division point. In practice, the restored mesh may include encoding distortion or the like, and thus may not completely match the original mesh before encoding. However, in the following description, for the sake of convenience, the original mesh is restored by decoding without considering encoding distortion and the like. In the following description, it is assumed that the polygon is triangular. Therefore, the polygon (face) is also referred to as a triangle below.

UVAtlas

As described above, the texture is arranged in the attribute map (two-dimensional region) and encoded. In order to reconstruct the mesh and apply a texture to each face of the mesh, it is necessary to keep correspondence between the base mesh and the texture. That is, the position (UV coordinates) of the attribute map (two-dimensional region) corresponding to each vertex of the base mesh is derived. In this specification, the processing of generating the UV coordinates of each vertex of the base mesh in this manner is also referred to as "unfolding (UV unfolding)".

UVAtlas has been available as such a UV coordinate generation method (UV unfolding method) for V-DMC. In a case where the base mesh is unfolded by applying UVAtlas, for example, as illustrated in a square 31 in Fig. 3, transmission information such as a vertex list, a triangle list, a UV list, and a UV triangle list is encoded. The UV list is information indicating UV coordinates (u,v) of each vertex of the base mesh, and is transmitted to the decoding side as the Atlas information.

orthoAtlas

In recent years, for example, as described in NPL 2 to NPL 4, orthoAtlas has been proposed as a UV coordinate generation method (UV unfolding method) different from UVAtlas. For orthoAtlas, orthogonal projections (six directions) are used to generate the UV coordinates. In other words, the UV coordinates can be derived from the projection direction, so that the UV coordinates can be derived by a decoder. Therefore, the UV coordinates need not be transmitted.

That is, when orthoAtlas is applied, as illustrated in a square 32 in Fig. 3, identification information (patch ID) of a patch to which each vertex belongs is indicated instead of the UV coordinates in the UV list. The identification information of the patch is also referred to as a connected component ID (CC id). A projection image in which a texture is projected in a predetermined direction is mapped to the attribute map. At this time, the texture is divided into small regions and projected in order to avoid superimposition or to improve the resolution by projecting the texture in a more optimal projection direction. The small regions are also referred to as patches. Since CC id can be expressed by an integer value, the code amount can be reduced as compared with the floating-point UV coordinates. That is, the code amount of the UV list can be reduced as compared with the case of UVAtlas.

However, since the projection direction cannot be identified by the CC id only, patch information is transmitted as Atlas information for each patch. The patch information is information on patch mapping. For example, as illustrated in a

square 33 in Fig. 3, the patch information (patch info) may include information such as information (projId) indicating a projection direction of each patch, information (orientId) indicating a rotation angle, information (2dPosX,2dPosY) indicating a position in the 2D, information (2dSizeX,2dSizeY) indicating a patch size, and information (ScaleFlag(,Scale)) indicating a patch scale (magnification). Therefore, the direction/angle of projection of each vertex on the attribute map can be recognized based on the patch information of corresponding CC. Thus, orthoAtlas is an unfolding method that involves the transmission of patch information. In general, the code amount can be reduced more in the case of applying orthoAtlas than in the case of applying UVAtlas even when the patch information is included.

Note that there are a plurality of packing methods for textures in the case of applying orthoAtlas, such as default, small on top, Tetris, and Projection, for example. Further, in NPL 4, a method of improving the correlation in the time direction of projection packing has been proposed.

Image Quality Comparison

However, when orthoAtlas is applied, the ratio of textures to the attribute map (also referred to as an effective area ratio) may be low as compared with the case where UVAtlas is applied. Fig. 4 illustrates an example of how a texture (patch) is arranged in the attribute map. An attribute map 41 illustrates an example of an attribute map in a case where UVAtlas is applied. An attribute map 42 illustrates an example of an attribute map in a case where orthoAtlas (default packing) is applied. An attribute map 43 illustrates an example of an attribute map in a case where orthoAtlas (projection packing) is applied. In each of the attribute map 41 to the attribute map 43, a gray portion indicates a mapped texture (patch). As illustrated in Fig. 4, in the case of the attribute map 41 (UVAtlas), the effective area ratio is 55%. In the case of the attribute map 42 (orthoAtlas (default packing)), the effective area ratio is 46%. In the case of the attribute map 43 (orthoAtlas (projection packing)), the effective area ratio is 28.5%.

Therefore, when UVAtlas is applied, the texture resolution is as indicated by a texture 51 and a texture 52 in Fig. 5. In addition, when orthoAtlas (default packing) is applied, the texture resolution is as indicated by a texture 61 and a texture 62 in Fig. 6. In addition, when orthoAtlas (projection packing) is applied, the texture resolution is as indicated by a texture 71 and a texture 72 in Fig. 7. The resolution of each texture illustrated in Figs. 5 to 7 is expressed by density. The lower density (that is, closer to white) indicates a higher resolution, and the higher density (that is, closer to black) indicates a lower resolution. The density and the black area decrease in the order of Fig. 5, Fig. 6, and Fig. 7. Therefore, the texture 51 and the texture 52 have the highest resolution among the examples in Figs. 5 to 7. In other words, the texture 71 and the texture 72 have the lowest resolution.

Thus, when orthoAtlas is applied, the texture resolution (i.e., image quality) is low as compared with the case where UVAtlas is applied. Fig. 8 illustrates an example of comparison in texture peak signal-to-noise ratio (PSNR) between the case where orthoAtlas is applied and the case where UVAtlas is applied. A graph 81 shown on the upper side of the figure and a graph 82 on the lower side of the figure correspond to a result of the comparison in PSNR between different samples. In the graph 81 and the graph 82, the solid line indicates the PSNR in the case where UVAtlas is applied, and the dotted line indicates the PSNR in the case where orthoAtlas is applied. In either case, the PSNR is higher in the case where UVAtlas is applied than in the case where orthoAtlas is applied. Thus, with substantially the same code amounts (bit rate), the texture image quality may be lower in the case where orthoAtlas is applied than in the case where UVAtlas is applied. That is, in the case where orthoAtlas is applied, the encoding efficiency may be compromised as compared with the case where UVAtlas is applied.

In this specification, the encoding efficiency of a mesh refers to the quality of the mesh (including the image quality of the texture and the display image) with respect to the code amount. That is, for example, with substantially the same code amounts, a higher quality of the mesh reconstructed after decoding can be regarded as achieving a higher encoding efficiency. In other words, with the same level of quality of the mesh reconstructed after decoding, a smaller code amount can be regarded as achieving a higher encoding efficiency.

Meta Information Amount

In the case of orthoAtlas, the code amount of patch information increases in proportion to the number of patches. Therefore, finely divided patches for the sake of improvement in texture resolution may lead to an increase in the code amount of the meta information due to an increase in the patch information transmitted instead of the UV coordinates.

In the table illustrated in Fig. 9, the code amount (bit rate) of the geometry, the code amounts (bit rate) of the textures, the code amount (bit rate) of the meta information, and the entire code amount (bit rate) are compared between the case where UVAtlas is applied and the case where orthoAtlas is applied. This comparison is performed for each of the meshes of the five types of bit rates of a sequence 1 to a sequence 3. As illustrated in Fig. 9, in the case where UVAtlas is applied, the bit rate of the meta information (Meta) is about 0.004 Mbps. On the other hand, in the case where orthoAtlas is applied, the bit rate of the meta information (Meta) is about 0.026 Mbps to 0.170 Mbps. That is, in the case where orthoAtlas is applied, the ratio of meta information is high compared with the case where UVAtlas is applied.

Therefore, in the case where orthoAtlas is applied, the influence of an increase in the code amount of the meta information due to an increase in the number of patches is large, and the encoding efficiency may be compromised as compared with the case where UVAtlas is applied.

Method for Improving Texture Image Quality

To improve the image quality of the texture, for example, the projection direction of the texture may be increased. A large angular difference between the vertical direction of the face and the projection direction is likely to lead to compromised texture image quality. Therefore, a larger variation in projection direction facilitates suppression of an increase in the angular difference. For example, in the case of orthoAtlas, the texture image quality is likely to be compromised by enabling projection in oblique directions in addition to the six orthogonal directions. Still, with such a method, the patches are more likely to be finely divided due to an increase in the number of projection directions. This may lead to a lower encoding efficiency due to an increase in the code amount of the meta information.

As another possible method, the resolution may be improved by enlarging the entire texture arranged on the attribute map. However, this method involves enlargement of a portion other than a portion where the resolution needs to be improved. Thus, the code amount of the texture unnecessarily increases and the encoding efficiency may be compromised.

As another possible method, the projection direction (projection id) more suitable for each triangle may be enabled to be selected through fine division of CC. However, this method involves an increase in the number of patches. Thus, the code amount of the meta information increases, and the encoding efficiency may be compromised.

Thus, in the case where orthoAtlas is applied, the encoding efficiency may be compromised as compared with the case where UVAtlas is applied as described above.

3. Improvement in UV Coordinate Generation Method

Method 1

Therefore, as illustrated in the top row of the table in Fig. 10, common patch information that is common to a plurality of frames may be transmitted (method 1). In the case of known orthoAtlas, patch information is encoded and transmitted as Atlas information for all intra-patches. Instead of such patch information, common patch information common to a plurality of frames (applicable to a plurality of frames) is generated, encoded, and transmitted.

Hereinafter, the information processing device that encodes the 3D data including the base mesh and the displacement vector is also referred to as a first information processing device. For example, the first information processing device includes an Atlas information generation unit configured to unfold a base mesh into a two-dimensional region using an unfolding method involving transmission of patch information and generate, as Atlas information, common patch information that is patch information common to a plurality of frames, an Atlas information encoding unit configured to encode Atlas information including the common patch information generated, an attribute map generation unit configured to map a projection image of a texture of an original mesh to a two-dimensional region so as to correspond to the unfolding method using the common patch information generated and generate an attribute map, an attribute video encoding unit configured to encode an attribute video having the attribute map generated serving as a frame image, and a bitstream generation unit configured to generate a bitstream including encoded data of the base mesh, encoded data of a displacement video, encoded data of the attribute video, and encoded data of the Atlas information.

In the first information processing device, a base mesh is unfolded into a two-dimensional region using an unfolding method involving transmission of patch information and , as Atlas information, common patch information that is patch information common to a plurality of frames is generated, Atlas information including the common patch information generated is encoded, a projection image of a texture of an original mesh is mapped to a two-dimensional region so as to correspond to the unfolding method using the common patch information generated to generate an attribute map, an attribute video is encoded having the attribute map generated serving as a frame image, and a bitstream including encoded data of the base mesh, encoded data of a displacement video, encoded data of the attribute video, and encoded data of the Atlas information is generated.

Note that the base mesh is a mesh that is generated by decimating vertices from the original mesh to be encoded including vertices and connections representing a three-dimensional structure of an object, and has a lower definition than the original mesh. The displacement video is a moving image having, as a frame image, a displacement map that is a two-dimensional region in which displacement vectors indicating displacement of division points that are vertices generated by subdividing the base mesh are packed. The Atlas information is information used for mesh reconstruction, and includes information indicating the correspondence between the base mesh, and the displacement map and the attribute map. The patch information is information on mapping of patches of the projection image of the texture.

As described above, since the common patch information can be applied to a plurality of frames, the first

information processing device does not need to transmit the patch information for each frame, and thus redundancy can be suppressed. Accordingly, the first information processing device can suppress an increase in the code amount of the patch information. Thus, a decrease in the encoding efficiency for 3D data including a base mesh and a displacement vector can be suppressed in a case of applying an unfolding method involving transmission of patch information.

In the following, an information processing device that decodes a bitstream and generates 3D data including a base mesh and a displacement vector is also referred to as a second information processing device. The second information processing device includes a demultiplexing unit configured to demultiplex a bitstream and extract encoded data of a base mesh, encoded data of a displacement video, encoded data of an attribute video, and encoded data of Atlas information, an Atlas information decoding unit configured to decode the extracted encoded data of the Atlas information to generate the Atlas information corresponding to an unfolding method involving transmission of patch information and including common patch information that is patch information common to a plurality of frames, a base mesh decoding unit configured to decode the extracted encoded data of the base mesh, to generate information on the base mesh, a base mesh reconstruction unit configured to reconstruct a base mesh from the information on the base mesh using the Atlas information, an attribute video decoding unit configured to decode the encoded data of the attribute video to generate an attribute map configured as a frame image of the attribute video, and a display processing unit configured to generate a display image by extracting a projection image of a texture of an original mesh mapped to the attribute map so as to correspond to the unfolding method using the common patch information included in the Atlas information, and applying the projection image to a decoding mesh to perform rendering.

In the second information processing device, a bitstream is demultiplexed and encoded data of a base mesh, encoded data of a displacement video, encoded data of an attribute video, and encoded data of Atlas information is extracted, the extracted encoded data of the Atlas information is decoded to generate the Atlas information corresponding to an unfolding method involving transmission of patch information and including common patch information that is patch information common to a plurality of frames, the extracted encoded data of the base mesh is decoded to generate information on the base mesh, a base mesh is reconstructed from the information on the base mesh using the Atlas information, the encoded data of the attribute video is decoded to generate an attribute map configured as a frame image of the attribute video, and a projection image of a texture of an original mesh mapped to the attribute map so as to correspond to the unfolding method using the common patch information included in the Atlas information is extracted, the projection image is applied to a decoding mesh, and rendering is performed to generate a display image.

Note that the base mesh is a mesh that is generated by decimating vertices from the original mesh to be encoded including vertices and connections representing a three-dimensional structure of an object, and has a lower definition than the original mesh. The displacement video is a moving image having, as a frame image, a displacement map that is a two-dimensional region in which displacement vectors indicating displacement of division points that are vertices generated by subdividing the base mesh are packed. The Atlas information is information used for mesh reconstruction, and includes information indicating the correspondence between the base mesh, and the displacement map and the attribute map. The patch information is information on mapping of patches of the projection image of the texture. Also, the decoding mesh is generated by applying a displacement vector derived from the encoded data of the displacement video to the reconstructed base mesh.

As described above, since the common patch information can be applied to a plurality of frames, the second information processing device does not need to acquire the patch information for each frame, and thus redundancy can be suppressed. Accordingly, the second information processing device can suppress an increase in the code amount of the patch information. Thus, a decrease in the encoding efficiency for 3D data including a base mesh and a displacement vector can be suppressed in a case of applying an unfolding method involving transmission of patch information.

The common patch information may be information on a large patch that is common to the plurality of frames and includes a plurality of small patches projected in the same direction.

For example, in the case of orthoAtlas (projection packing) described in Cited Document 4, patches (also referred to as small patches in this specification) are grouped for each projection direction. Therefore, the positions and orientations (and sizes) of the small patches can be made common between frames to some extent. Therefore, when a large patch (patch for each projection direction) including a small patch group in the same projection direction is set, the position, the orientation, the size, and the like of the large patch can be made common between frames. That is, the patch information of the large patch can be common patch information applicable to a plurality of frames.

For example, Fig. 11 illustrates an example of an attribute map in the case of applying orthoAtlas (projection packing) described in Cited Document 4. In an attribute map 110 illustrated in Fig. 11, the gray portions each represent a small patch. In the case of projection packing, the small patches are arranged so as to be grouped to some extent for each projection direction as described above. Therefore, the small patches can be grouped for each projection direction to form a large patch such as large patches 111 to 116. As described above, the position, the orientation, the size, and the like of each large patch can be made common to some extent between frames, and thus the patch information of each large patch can be used as the common patch information. By using the common patch information corresponding to a plurality of frames, the patch information of the large patch only needs to be transmitted once for the plurality of frames.

By using the common patch information in this manner, the patch information of the large patch 111 to the large patch 116 needs not to be transmitted for each frame, and thus it is possible to suppress redundancy and to suppress an increase in the code amount of the patch information. Thus, a decrease in the encoding efficiency for 3D data including a base mesh and a displacement vector can be suppressed in a case of applying an unfolding method involving transmission of patch information.

The common patch information can be associated with any continuous frame section. For example, the common patch information may correspond to a group of frames (GOF) (that is, the same common patch information may be applied to each frame of the GOF). In addition, the common patch information may correspond to the entire sequence (that is, the same common patch information may be applied to each frame in the sequence). That is, one piece of common patch information may be applied to an arbitrary number of frames.

The common patch information may include any information. For example, the common patch information may include at least one of information indicating a projection direction of the large patch, information indicating a rotation angle of the large patch, information indicating a position of the large patch in the two-dimensional region, information indicating a size of the large patch, and information indicating a magnification of the large patch. Information other than these pieces of information may be included in the common patch information.

Method 1-1

In addition, when the above-described Method 1 is applied, unique patch information for each frame may be transmitted as illustrated in the second row from the top of the table in Fig. 10 (Method 1-1). In each frame, in addition to the above-described common patch information, information that cannot be covered by the common patch information may be transmitted as unique patch information.

For example, the Atlas information generation unit of the first information processing device may further generate, as the Atlas information, unique patch information that is the patch information unique to a frame. That is, the Atlas information may further include unique patch information that is patch information unique to a frame. Further, the display processing unit of the second information processing device may extract a projection image (texture) using the common patch information and the unique patch information included in the Atlas information, apply the projection image to the decoding mesh, and perform rendering to generate a display image.

As described above, the common patch information and the unique patch information is transmitted, so that the common patch information and the frame-unique patch information can be applied to each frame. Thus, the patch information of each frame may be transmitted as more accurate information.

The unique patch information may include any information. For example, the unique patch information may include information (position shift information) indicating an inter-frame displacement of the large patch corresponding to the common patch information. For example, in Fig. 12, it is assumed that a frame 121 and a frame 122 are two consecutive frames of the attribute video. In these frames, a large patch 133 including a small patch 131 and a small patch 132 is assumed to be set. Between the frame 121 and the frame 122, this large patch 133 is displaced (moved). Information indicating such a position shift (arrow 141) between frames may be transmitted as the unique patch information. Thus, since only the information indicating the arrow 141 needs to be transmitted as the unique patch information, it is possible to suppress an increase in the code amount compared with a case where the patch information of the large patch is transmitted in each of the frame 121 and the frame 122.

The unique patch information may include information on a small patch included in the large patch corresponding to the common patch information. In the example in Fig. 12, the small patch 131 and the small patch 132 are displaced and deformed between the frame 121 and the frame 122. That is, the patch information of the small patch 131 and the small patch 132 is the frame-unique information. Therefore, these pieces of patch information (patch information of the small patch 131 and the small patch 132) may be transmitted as the unique patch information separately from the common patch information. In such a case, the unique patch information may be transmitted as a difference from the common patch information.

The unique patch information may include information on the small patch located outside the large patch corresponding to the common patch information. In the example in Fig. 12, the frame 122 includes a small patch 134. The small patch 134 is located outside the large patch 133. The patch information of the small patch 134 may be included in the unique patch information of the frame 122.

Method 2

As illustrated in the third row from the top of the table in Fig. 10, orthoAtlas and another method may be used in combination as the UV coordinate generation method (UV unfolding method) (method 2). As described above, when orthoAtlas is applied as the UV unfolding method, the resolutions of textures are likely to be compromised. In particular, the resolution of the texture is likely to be compromised in a portion with a complicated shape (a portion where the angle of the

face with respect to the projection direction is likely to be large), a boundary of the patch, or the like, as in a black portion in the texture 71 and the texture 72 in Fig. 7. Therefore, the local region where such reduction in the resolution (encoding efficiency) occurs due to orthoAtlas is UV-unfolded by another UV coordinate generation method (UV unfolding method). In this way, for example, as in the case of the texture 51 and the texture 52 in Fig. 5, the resolution of the texture can be improved. That is, a decrease in texture quality can be suppressed.

In this case, if another unfolding method is applied to all the regions of the textures, the code amount may increase as compared with the case where orthoAtlas is applied. By applying orthoAtlas to a portion where sufficient resolutions can be obtained even if orthoAtlas is applied, and applying another unfolding method only to a local region where resolution is reduced with orthoAtlas (that is, using orthoAtlas and another method in combination), it is possible to suppress a reduction in the quality of textures while suppressing such an unnecessary increase in the code amount. Accordingly, it is possible to mitigate a decrease in the encoding efficiency.

For example, the first information processing device includes an Atlas information generation unit configured to unfold the base mesh into the two-dimensional region using the first unfolding method involving transmission of the patch information, unfold the local region of the base mesh into the two-dimensional region using the second unfolding method different from the first unfolding method, and generate the patch information for the base mesh unfolded using the first unfolding method and the meta information for the local region generated using the second unfolding method as the Atlas information, an Atlas information encoding unit configured to encode the Atlas information including the patch information and the meta information generated, an attribute map generation unit configured to generate the attribute map by mapping the projection image of the texture corresponding to the base mesh to the two-dimensional region so as to correspond to the first unfolding method using the patch information generated and mapping the texture corresponding to the local region to the two-dimensional region so as to correspond to the second unfolding method using the meta information generated, an attribute video encoding unit configured to encode the attribute video having the attribute map generated serving as the frame image, and a bitstream generation unit configured to generate the bitstream including the encoded data of the base mesh, the encoded data of the displacement video, the encoded data of the attribute video, and the encoded data of the Atlas information.

With the first information processing device, the base mesh is unfolded into the two-dimensional region using the first unfolding method involving transmission of the patch information, the local region of the base mesh is unfolded into the two-dimensional region using the second unfolding method different from the first unfolding method, the patch information for the base mesh unfolded using the first unfolding method and the meta information for the local region generated using the second unfolding method are generated as the Atlas information, the Atlas information including the patch information and the meta information generated is encoded, the attribute map is generated by mapping the projection image of the texture corresponding to the base mesh to the two-dimensional region so as to correspond to the first unfolding method using the patch information generated and mapping the texture corresponding to the local region to the two-dimensional region so as to correspond to the second unfolding method using the meta information generated, the attribute video having the attribute map generated serving as the frame image is encoded, and the bitstream including the encoded data of the base mesh, the encoded data of the displacement video, the encoded data of the attribute video, and the encoded data of the Atlas information is generated.

Note that the base mesh is a mesh that is generated by decimating vertices from the original mesh to be encoded including vertices and connections representing a three-dimensional structure of an object, and has a lower definition than the original mesh. The displacement video is a moving image having, as a frame image, a displacement map that is a two-dimensional region in which displacement vectors indicating displacement of division points that are vertices generated by subdividing the base mesh are packed. The Atlas information is information used for mesh reconstruction, and includes information indicating the correspondence between the base mesh, and the displacement map and the attribute map. The patch information is information on mapping of patches of the projection image of the texture. The local region described above may be, for example, a portion of the base mesh where the resolution (encoding efficiency) is reduced when the first unfolding method is used. That is, the second unfolding method may be applied to a portion of the base mesh where the image quality (lower resolution) of the texture becomes lower than a predetermined reference when the first unfolding method is applied.

In this way, the first information processing device can appropriately apply the first unfolding method and the second unfolding method, and can suppress a decrease in the quality of the texture while suppressing an unnecessary increase in the code amount. Accordingly, the first information processing device can mitigate a decrease in the encoding efficiency.

For example, the second information processing device includes a demultiplexing unit configured to demultiplex the bitstream, extract the encoded data of the base mesh, the encoded data of the displacement video, the encoded data of the attribute video, and the encoded data of the Atlas information, an Atlas information decoding unit configured to decode the extracted encoded data of the Atlas information to generate the Atlas information corresponding to the first unfolding method involving transmission of the patch information and the second unfolding method different from the first unfolding method and including the patch information for the base mesh unfolded using the first unfolding method and the meta

information for the local region of the base mesh unfolded using the second unfolding method, a base mesh decoding unit configured to decode the extracted encoded data of the base mesh to generate information on the base mesh, a base mesh reconstruction unit configured to reconstruct the base mesh from the information on the base mesh, an attribute video decoding unit configured to decode the encoded data of the attribute video to generate the attribute map configured as the frame image of the attribute video, and a display processing unit configured to generate a display image by extracting the projection image of the texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to the decoding mesh to perform rendering.

With the second information processing device, the bitstream is demultiplexed to extract the encoded data of the base mesh, the encoded data of the displacement video, the encoded data of the attribute video, and the encoded data of the Atlas information, the extracted encoded data of the Atlas information is decoded to generate the Atlas information corresponding to the first unfolding method involving transmission of the patch information and the second unfolding method different from the first unfolding method and including the patch information for the base mesh unfolded using the first unfolding method and the meta information for the local region of the base mesh unfolded using the second unfolding method, the extracted encoded data of the base mesh is decoded to generate the information on the base mesh, the base mesh is reconstructed from the information on the base mesh using the Atlas information, the encoded data of the attribute video is decoded to generate the attribute map configured as the frame image of the attribute video, the projection image of the texture corresponding to the base mesh mapped to the attribute map so as to correspond to the first unfolding method is extracted using the patch information included in the Atlas information, the texture corresponding to the local region mapped to the attribute map so as to correspond to the second unfolding method is extracted using the meta information included in the Atlas information, the projection image and the texture extracted are applied to the decoding mesh to perform rendering to generate the display image.

Note that the base mesh is a mesh that is generated by decimating vertices from the original mesh to be encoded including vertices and connections representing a three-dimensional structure of an object, and has a lower definition than the original mesh. The displacement video is a moving image having, as a frame image, a displacement map that is a two-dimensional region in which displacement vectors indicating displacement of division points that are vertices generated by subdividing the base mesh are packed. The Atlas information is information used for mesh reconstruction, and includes information indicating the correspondence between the base mesh, and the displacement map and the attribute map. The patch information is information on mapping of patches of the projection image of the texture. Also, the decoding mesh is generated by applying a displacement vector derived from the encoded data of the displacement video to the reconstructed base mesh. The local region described above may be, for example, a portion of the base mesh where the resolution (encoding efficiency) is reduced when the first unfolding method is used. That is, the second unfolding method may be applied to a portion of the base mesh where the image quality (lower resolution) of the texture becomes lower than a predetermined reference when the first unfolding method is applied.

In this way, the second information processing device can appropriately apply the first unfolding method and the second unfolding method, and can suppress a decrease in the quality of the texture while suppressing an unnecessary increase in the code amount. Accordingly, the second information processing device can mitigate a decrease in the encoding efficiency.

Method 2-1

In the case where the above-described method 2 is applied, as illustrated in the fourth row from the top of the table in Fig. 10, orthoAtlas (first unfolding method) may be applied to the entire texture (that is, the entire base mesh), and another unfolding method (second unfolding method) may be applied to some patches (that is, local regions of the base mesh). For example, the entire base mesh is first UV-unfolded using orthoAtlas to generate Atlas information such as patch information. Then, the local region in the base mesh is subjected to UV unfolding again by applying the second unfolding method. When reconstructing the mesh, orthoAtlas is applied to derive UV coordinates for the entire base mesh, and a texture (texture corresponding to orthoAtlas) is applied to the reconstructed mesh (decoding mesh) according to the UV coordinates. Thereafter, the second unfolding method is applied again to the local region to which the second unfolding method has been applied, and a texture (a texture corresponding to the second unfolding method) is applied to the decoding mesh. That is, the texture of the local region is updated. The local region may be, for example, a portion of the base mesh where the texture resolution (image quality) is reduced when orthoAtlas is applied.

For example, the Atlas information generation unit of the first information processing device may unfold the entire base mesh into a two-dimensional region using the first unfolding method, and unfold the local region into a two-dimensional region using the second unfolding method.

The Atlas information decoding unit of the second information processing device may decode the extracted

encoded data of the Atlas information to generate the Atlas information corresponding to the first unfolding method and the second unfolding method and including patch information for the entire base mesh unfolded using the first unfolding method and the meta information for the local region unfolded using the second unfolding method. The display processing unit may generate the display image by extracting a texture corresponding to the entire base mesh mapped to the attribute map so as to correspond to the first unfolding method using the patch information included in the Atlas information, extracting a texture corresponding to the local region mapped to the attribute map so as to correspond to the second unfolding method using the meta information included in the Atlas information, and applying the projection image and the texture extracted to the decoding mesh to perform rendering.

For example, the second unfolding method is applied to a portion having a lower image quality than a predetermined reference. In this way, the first unfolding method and the second unfolding method can be applied appropriately, and a decrease in the quality of the texture can be suppressed while suppressing an unnecessary increase in the code amount more easily. Accordingly, it is possible to mitigate a decrease in the encoding efficiency.

Method 2-2

In a case where the above-described method 2 is applied, as illustrated in the fifth row from the top of the table in Fig. 10, orthoAtlas may be applied to some regions (some patches) of the base mesh, and another unfolding method (second unfolding method) may be applied to the other regions (remaining patches) of the base mesh. That is, the regions (patches) to which the respective unfolding methods are applied may not overlap each other.

The Atlas information generation unit of the first information processing device may unfold the base mesh, excluding the local region described above, into the two-dimensional region using the first unfolding method, and unfold the local region described above into the two-dimensional region using the second unfolding method, for example.

The Atlas information decoding unit of the second information processing device may decode the extracted encoded data of the Atlas information to generate the Atlas information corresponding to the first unfolding method and the second unfolding method and including patch information for the base mesh, excluding the local region, unfolded using the first unfolding method and the meta information for the local region unfolded using the second unfolding method. The display processing unit may generate the display image by extracting a texture corresponding to a region of the base mesh, excluding the local region, mapped to the attribute map so as to correspond to the first unfolding method using the patch information included in the Atlas information, extracting a texture corresponding to the local region of the base mesh mapped to the attribute map so as to correspond to the second unfolding method using the meta information included in the Atlas information, and applying the projection image and the texture extracted to the decoding mesh to perform rendering.

For example, the second unfolding method is applied to a portion having a lower image quality than a predetermined reference. With this configuration, it is possible to suppress occurrence of redundant processing, and thus suppress an increase in unnecessary processing and further mitigate a decrease in the encoding efficiency.

Method 2-3

In the case where the above-described method 2 is applied, orthoAtlas and UVAtlas may be used in combination as illustrated in the sixth row from the top of the table in Fig. 10. That is, UVAtlas may be applied as the second unfolding method described above. As described with reference to Figs. 5 to 7, the resolutions of textures are generally improved in the case of applying UVAtlas compared with the case of applying orthoAtlas. Therefore, orthoAtlas is applied to a portion (a region other than a local region to be described below) where sufficient resolutions can be obtained even when orthoAtlas is applied, and UVAtlas is applied to a local region where resolutions of textures are reduced when orthoAtlas is applied. That is, orthoAtlas and UVAtlas are used in combination. With this configuration, it is possible to suppress an unnecessary increase in the code amount and further suppress a decrease in the texture quality. Accordingly, it is possible to mitigate a decrease in the encoding efficiency. Note that the processing in this case may be executed as in the above-described method 2-1 or may be executed as in the above-described method 2-2.

For example, the second unfolding method may be an unfolding method involving transmission of coordinate information indicating coordinates of vertices of the base mesh in a two-dimensional region, and the Atlas information generation unit of the first information processing device may generate, as the meta information, coordinate information on a local region of the base mesh to which the second unfolding method is applied, and generate Atlas information including the coordinate information. Further, the attribute map generation unit may map the projection image of the texture corresponding to the local region to the attribute map so as to correspond to the second unfolding method using the meta information generated (including the coordinate information). The Atlas information decoding unit of the second information processing device may decode the extracted encoded data of the Atlas information to generate the Atlas information including the coordinate information as the meta information. The local region may be, for example, a portion of the base mesh where the resolution (image quality) of the texture is reduced when the first unfolding method is applied.

Transmission of UV Coordinates

For example, as illustrated in Fig. 13, a patch 151 to which UVAtlas is applied may be arranged in a region where no patch is placed in an attribute map 150 where a patch group to which orthoAtlas is applied is arranged. The patch 151 has the UV coordinates of its vertex transmitted. The method of thus transmitting the UV coordinates may be any method. For example, UV coordinates of each vertex of a patch to which UVAtlas is applied may be transmitted using a UV list.

For example, in the UV list, a combination of CC id and a predetermined value (for example, (CC id,0)) may be transmitted for a vertex belonging to a patch to which orthoAtlas is applied, and UV coordinates (u,v) may be transmitted for a vertex belonging to a patch to which UVAtlas is applied. The predetermined value to be combined with the CC id may be any value as long as the value is not used as the UV coordinates (the above-described "0" is an example, and the value is not limited to this example).

For example, the Atlas information generation unit of the first information processing device may generate, as the meta information, the coordinate information for each vertex in the local region. The Atlas information decoding unit of the second information processing device may decode the extracted encoded data of the Atlas information to generate the Atlas information including, as the meta information, coordinate information of each vertex in the local region. The local region is a region to which the second unfolding method is applied. The local region may be, for example, a portion of the base mesh where the resolution (image quality) of the texture is reduced when the first unfolding method is applied.

That is, in this case, the vertex for which (CC id,0) is transmitted in the UV list is regarded as a vertex of a patch of a region to which orthoAtlas is applied by the decoder, and the UV coordinates are derived from the patch information. That is, this (CC id,0) is converted into the UV coordinates of the vertex to be used. This processing is executed, for example, when the base mesh is reconstructed. In addition, a vertex for which (u,v) (v > 0) is transmitted in the UV list is regarded as a vertex of a patch of a local region to which UVAtlas is applied by the decoder, and a value thereof is used as UV coordinates.

With this configuration, whether the patch is a patch to which orthoAtlas is applied or a patch to which UVAtlas is applied can be easily identified.

Further, for example, as described below, for the vertex of the patch to which UVAtlas is applied, a list of identification information of faces (face ID list), a list of UV coordinates, and UV connectivity may be transmitted as meta information separately from the UV list. In such a case, the decoder may derive the UV coordinates based on the meta information. With this configuration, whether the patch is a patch to which orthoAtlas is applied or a patch to which UVAtlas is applied can be easily identified.

```
face ID list = (5, 6, 10, 11, 15, ...)
```

UV coordinate list = {uv0 (u0,v0), uv1 (u1,v1), uv2 (u2,v2), ...}

```
UV connectivity = {(0, 1, 2), ...}
```

The Atlas information generation unit of the first information processing device may generate, as the meta information, identification information on each face, the coordinate information on each vertex, and information on each connection in the local region, for example. The Atlas information decoding unit of the second information processing device may decode the extracted encoded data of the Atlas information to generate the Atlas information including, as the meta information, identification information on each face, the coordinate information on each vertex, and information on each connection in the local region. The local region is a region to which the second unfolding method is applied. The local region may be, for example, a portion of the base mesh where the resolution (image quality) of the texture is reduced when the first unfolding method is applied.

Of course, the UV coordinates of the vertex of the patch to which UVAtlas is applied may be transmitted using a method other than these.

Note that whether to apply orthoAtlas or UVAtlas can be controlled in any data unit. For example, the selection may be made for each triangle or for each patch. Further, any criterion may be used as a criterion for determining which of the unfolding methods is to be applied. For example, the image quality (PSNR or the like) of the texture may be actually derived, and the unfolding method may be selected based on the value thereof. Further, the unfolding method may be selected based on information enabling estimation on whether the resolution level of the texture is high or low, such as the direction of the face with respect to the projection direction, for example.

As described above, by applying UVAtlas to a local region of the base mesh and applying orthoAtlas to the other regions, the texture can be projected in more appropriate projection directions, whereby a reduction in resolution of the textures can be suppressed. In addition, it is possible to suppress an increase in patch division (an increase in the number of patches), and thus to suppress an increase in patch information (an increase in the amount of the meta information).

Accordingly, it is possible to mitigate a decrease in the encoding efficiency. The local region may be, for example, a portion of the base mesh where the texture resolution (image quality) is reduced when orthoAtlas is applied.

Method 2-4

In the case where the above-described method 2 is applied, some triangular textures may be arranged according to a rule as illustrated in the seventh row from the top of the table in Fig. 10. That is, as the second unfolding method described above, an unfolding method of arranging textures on an attribute map according to a predetermined rule may be applied.

The textures regularly arranged in this manner may be arranged in a state of being applied to the face. That is, the projection image may not be projected in the projection directions (for example, six directions). In other words, the texture can be regarded as a projection image projected in a direction perpendicular to the face. Therefore, this texture can suppress a reduction in resolution depending on the projection direction. In addition, by securing a region of a sufficient size as a region in which a texture is arranged, the texture can be arranged with a sufficient resolution.

That is, in general, the resolutions of the textures regularly arranged in this manner can be easily made higher than the resolutions of the textures arranged with orthoAtlas applied. Therefore, orthoAtlas is applied to a portion (a region other than a local region to be described below) where sufficient resolutions can be obtained even when orthoAtlas is applied, and such an unfolding method (unfolding method with some triangular textures arranged according to a rule) is applied to a local region where resolutions of textures are reduced when orthoAtlas is applied. That is, orthoAtlas and this unfolding method are used in combination. With this configuration, it is possible to suppress an unnecessary increase in the code amount and further suppress a decrease in the texture quality. Accordingly, it is possible to mitigate a decrease in the encoding efficiency. Note that the processing in this case may be executed as in the above-described method 2-1 or may be executed as in the above-described method 2-2.

In the case of the unfolding method of arranging some triangular textures according to a rule, it is necessary to transmit information on the arranged textures. This unfolding method can be therefore regarded as an unfolding method involving the transmission of information on the textures mapped regularly.

For example, the second unfolding method may be an unfolding method involving transmission of information on the texture mapped regularly, the Atlas information generation unit of the first information processing device may generate information on the texture as the meta information, and the attribute map generation unit may regularly map the texture corresponding to a face of the base mesh to the attribute map using the information generated on the texture. The Atlas information decoding unit of the second information processing device may generate the Atlas information including the information on the texture as the meta information by decoding the encoded data of the Atlas information extracted from the bitstream. The display processing unit of the second information processing device may extract a texture corresponding to a face of the base mesh mapped regularly to the attribute map so as to correspond to the second unfolding method using the meta information included in the Atlas information. For example, the second unfolding method is applied to a local region of the base mesh. The local region may be, for example, a portion of the base mesh where the resolution (image quality) of the texture is reduced when the first unfolding method is applied.

Method 2-4-1

In the case where the above-described method 2-4 is applied, as illustrated in the eighth row from the top of the table in Fig. 10, the texture may be arranged according to a predetermined rule (method 2-4-1).

For example, as illustrated in Fig. 14, textures 161 corresponding to faces (triangles) of the base map may be regularly laid in regions where no patch is disposed in an attribute map 160 where a patch group to which orthoAtlas is applied is disposed. In Fig. 14, while only one of the gray colored triangles is labeled with the reference numeral "161", all of the gray colored squares in the attribute map 160 are the regularly arranged textures 161.

That is, in this case, the textures corresponding to some of the faces are arranged at predetermined positions according to a predetermined rule. The textures arranged regularly in this manner may be any textures. For example, a texture corresponding to a triangle group (face group) belonging to a patch (for example, a patch in which the number of triangles belonging thereto is smaller than a predetermined number) which is smaller than a predetermined reference due to patch division, a triangle group of a patch in which a texture having a high resolution is desired to be separately transmitted in order to improve the texture resolution, or the like may be the target.

As described above, in the case of this unfolding method, it is necessary to transmit information on the regularly arranged textures. Since the textures are arranged according to a rule, the decoder can obtain the region in which the textures are arranged from the arrangement order or the like based on the rule. That is, for example, if a list of faces in which the arrangement order is indicated by the position (the order of the face) is transmitted, the decoder can obtain the region in which the texture corresponding to each face is arranged by the position in the list.

Therefore, as information on the texture, identification information (face ID) of triangles (faces) corresponding to

the respective textures arranged regularly may be transmitted as a list instead of the patch information and the UV coordinates. That is, the information on the texture may include a list of identification information of faces corresponding to the regularly mapped textures. For example, as illustrated in Fig. 14, it is assumed that the textures 161 are arranged in order from the left at the upper end of the attribute map 160. With the first face ID in the face ID list defined as "ID5", it is understood that the texture corresponding to the face with "ID5" is arranged at the upper left end region of the attribute map 160 as illustrated in Fig. 14. Therefore, transmission of the patch information and the UV information can be omitted, and an increase in the code amount can be suppressed.

Instead of the identification information of the face, identification information (for example, CC id) of the patch to which the face belongs may be transmitted. That is, the information on the texture may include a list of identification information of patches to which the faces corresponding to the regularly mapped textures belong.

Further, since the shape of the face (triangle) of the mesh is not fixed, the texture arranged in the attribute map according to the rule may be appropriately shaped (deformed, enlarged, reduced, rotated, or the like) so as to match the shape of the region when arranged in the attribute map. The pattern of the arrangement of the textures illustrated in Fig. 14 is an example. The rule for arranging the textures may be any rule, and is not limited to the examples in Figs. 14 and 15. For example, in Figs. 14 and 15, the textures are arranged in the horizontal direction in the figures, but the textures may be arranged in the vertical direction in the figures. It is a matter of course that any other method may be used.

The region (shape, size, position, and the like thereof) in which the textures are arranged according to the predetermined rule is arbitrary. For example, the shape of this region may be any shape, and is not limited to the right triangle in the example in Fig. 14. The size and position of the region are not limited to the example in Fig. 14.

Method 2-4-2

In addition, in a case where the above-described method 2-4 is applied, a rule as illustrated in the bottom row of the table in Fig. 10 may be set. That is, the textures may be arranged according to the set rule (method 2-4-2).

For example, the shape, size, position, and the like of the region in which the textures are arranged according to the predetermined rule may be variable. That is, this region (the shape, size, position, and the like thereof) may be configurable. In this case, information indicating settings that define this region (the shape, size, position, and the like thereof) may be transmitted as meta information (Atlas information).

For example, the information on the texture may include a list of identification information of the face corresponding to the texture mapped regularly and a parameter on a region to which the texture is mapped regularly.

The parameter may be any parameter. For example, the parameter may include information indicating the length of a side of the region. For example, the information may be information indicating the length of one side, or may be information indicating the length of each side. For example, if the shape of the region is fixed, the size of the region can be set by designating the length of one side. The shape of the region can also be set by designating the length of each side. In addition, the coordinates of the vertices or sides of the region may be designated instead of the length of the sides. In addition, information for designating the position, scale (magnification), rotation, and the like of the region may be included in the parameter.

In this manner, with the region (the shape, size, position, and the like thereof) in which a texture is arranged being variable, the texture can be arranged in a region more suitable for the texture. Thus, a reduction in the texture image quality can be suppressed, for example.

In addition, there may be a plurality of types of shapes, sizes, positions, and the like of the regions in which the textures are arranged. For example, regions of a plurality of sizes may be prepared, and each texture may be arranged in a region of a size corresponding to the resolution required for the texture. For example, in an attribute map 171 illustrated in Fig. 15, a texture 181, a texture 182, and a texture 183 are arranged with different resolutions (sizes). Among these, the texture 181 is the largest, and the texture 183 is the smallest. That is, the resolution required for the texture 181 is the highest, and the resolution required for the texture 183 is the lowest. With this configuration, it is possible to arrange a texture with a size corresponding to the resolution required for the texture, and thus it is possible to suppress an unnecessary increase in the code amount of the attribute map while suppressing a decrease in the resolution of the texture.

In such a case, for example, the above-described parameter may include information indicating the length of the side of the region for each resolution, that is, information indicating the length of the side of the region may be transmitted as a parameter for each size of the region. With this configuration, regions of different sizes can be set.

In the case of arranging textures with a plurality of sizes (resolutions) in this manner, the textures may be arranged collectively (arranged so as to be continuous) for each size (resolution) as in the example illustrated in Fig. 15. In this case, the number of textures (regions) of each size (resolution) to be arranged may be variable. That is, the number of textures (regions) may be configurable. For example, the above-described parameter may include information indicating the number of regions for each resolution. For example, it may be possible to designate the maximum value of the number of textures (regions) that can be arranged. In this case, information indicating the maximum value may be included in the

above-described parameter. In addition, it may be possible to designate the number of textures (regions) to be arranged in one line (or the maximum value thereof). In this case, information indicating the number (or the maximum value) thereof may be included in the above-described parameter.

The textures may be arranged at an interval. For example, in an attribute map 172 illustrated in Fig. 15, textures 184 are arranged at a predetermined interval. By forming a gap between textures in this manner, dilation processing or the like can be executed on the attribute map. Accordingly, it is possible to mitigate a decrease in the encoding efficiency for the attribute map. In such a case, it may be possible to designate the length of the interval of the textures (that is, the size of the gap). For example, information indicating the length of the interval of the textures mapped regularly may be included in the above-described parameter.

Note that the parameter may include a parameter on a rule other than that for the region, such as information for designating the order of arranging the textures, for example.

This parameter may be applied only in one frame, or may be applied to a plurality of frames (predetermined frame section). That is, the parameter may be designated in each frame, or the parameter may be designated for each predetermined frame section. In addition, information on a difference from the previous time may be designated as a parameter.

Combination

Each of the methods described above can be applied in combination with other methods as appropriate. For example, method 1 and method 2 described above may be applied in combination.

For example, method 2 may be applied to the first information processing device to which method 1 is applied. In this case, the Atlas information generation unit of the first information processing device to which method 1 is applied may unfold a base mesh into a two-dimensional region using a first unfolding method involving transmission of patch information, unfold a local region of the base mesh into a two-dimensional region using a second unfolding method different from the first unfolding method, and generate, as Atlas information, common patch information for the base mesh unfolded using the first unfolding method and meta information for the local region generated using the second unfolding method. The attribute map generation unit may generate the attribute map by mapping the projection image corresponding to the base mesh so as to correspond to the first unfolding method using the common patch information generated and mapping the texture corresponding to the local region so as to correspond to the second unfolding method using the meta information generated.

Further, method 2 may be applied to the second information processing device to which method 1 is applied. In this case, in the second information processing device to which method 1 is applied, the Atlas information decoding unit may decode the extracted encoded data of the Atlas information to generate the Atlas information corresponding to the first unfolding method involving transmission of the patch information and the second unfolding method different from the first unfolding method and including common patch information for the base mesh unfolded using the first unfolding method and meta information for a local region of the base mesh unfolded using the second unfolding method. The display processing unit may generate the display image by extracting a texture corresponding to the base mesh mapped to the attribute map so as to correspond to the first unfolding method using the common patch information included in the Atlas information, extracting a texture corresponding to the local region mapped to the attribute map so as to correspond to the second unfolding method using the meta information included in the Atlas information, and applying the projection image and the texture extracted to the decoding mesh to perform rendering.

The local region may be, for example, a portion of the base mesh where the resolution (image quality) of the texture is reduced when the first unfolding method is applied. With this configuration, the same effect as that described above in Method 2 can be obtained. Of course, in this case, other methods (such as, for example, methods 2-1 to 2-4) applicable when method 2 is applied can be further applied.

For example, method 1 may be applied to the first information processing device to which method 2 is applied. In this case, in the first information processing device to which method 2 is applied, the Atlas information generation unit may generate, as the Atlas information, the common patch information that is patch information common to a plurality of frames for the base mesh unfolded using the first unfolding method. The attribute map generation unit may map the projection image corresponding to the base mesh so as to correspond to the first unfolding method using the common patch information generated.

Further, method 1 may be applied to the second information processing device to which method 2 is applied. In this case, in the second information processing device to which method 2 is applied, the Atlas information decoding unit may decode the extracted encoded data of the Atlas information to generate the Atlas information including the common patch information that is patch information common to a plurality of frames, for the base mesh unfolded using the first unfolding method. The display processing unit may extract a texture corresponding to the base mesh mapped to the attribute map so as to correspond to the first unfolding method using the common patch information included in the Atlas information.

With this configuration, the same effect as that described above in Method 1 can be obtained. Of course, in this case, other methods (such as, for example, method 1-1) applicable when method 1 is applied can be further applied.

4. First Embodiment

Encoding Device

The present technology can be applied to an encoding device for encoding a mesh. Fig. 16 is a block diagram illustrating an example of a configuration of an encoding device as an aspect of an information processing device to which the present technology is applied. An encoding device 300 illustrated in Fig. 16 is a device that encodes a mesh.

Fig. 16 illustrates main processing units, data flows, and the like, and those illustrated in Fig. 16 are not necessarily the entire configuration. That is, in the encoding device 300, a processing unit that is not illustrated as a block in Fig. 16 may exist, or processing or a data flow that is not indicated by an arrow or the like in Fig. 16 may exist.

The encoding device 300 encodes a mesh by a method basically similar to that of V-DMC described in the above-mentioned non-patent literatures except that the present technology is applied. For example, the encoding device 300 acquires an original mesh to be encoded and an attribute map including a texture corresponding to the original mesh. The original mesh includes not only information on the geometry of the mesh but also information (such as, for example, a UV list) indicating correspondence with the attribute map. The encoding device 300 encodes the original mesh and the attribute map using the V-DMC method, and generates and outputs a V-DMC bitstream.

As illustrated in Fig. 16, the encoding device 300 includes a preprocessing unit 311 and an encoding unit 312. The preprocessing unit 311 executes processing related to preprocessing before encoding. As illustrated in Fig. 19, the preprocessing unit 311 includes a mesh decimation unit 321, an Atlas information generation unit 322, and a displacement vector generation unit 323.

The mesh decimation unit 321 performs processing related to mesh decimation. For example, the mesh decimation unit 321 may acquire an original mesh input to the encoding device 300. The mesh decimation unit 321 may execute decimation processing (decimating of vertices) on the original mesh to generate a base mesh. The mesh decimation unit 321 may supply the generated base mesh to the Atlas information generation unit 322 together with the original mesh.

The Atlas information generation unit 322 executes processing related to generation of Atlas information corresponding to the base mesh. For example, the Atlas information generation unit 322 may acquire the base mesh and the original mesh supplied from the mesh decimation unit 321. The Atlas information generation unit 322 may generate Atlas information by performing UV unfolding on the base mesh or the like. At this time, the Atlas information generation unit 322 may generate Atlas information by applying orthoAtlas as the UV unfolding method. That is, the Atlas information generation unit 322 may generate Atlas information at least corresponding to orthoAtlas. The Atlas information generation unit 322 may supply the Atlas information thus generated to the displacement vector generation unit 323 together with the base mesh and the like.

The displacement vector generation unit 323 executes processing related to generation of a displacement vector. For example, the displacement vector generation unit 323 may acquire the base mesh, the Atlas information, and the like supplied from the Atlas information generation unit 322. The displacement vector generation unit 323 may acquire the original mesh input to the encoding device 300. The displacement vector generation unit 323 may generate a displacement vector for displacing division points generated by subdividing the base mesh using these pieces of information. The displacement vector generation unit 323 may supply the generated displacement vector to the encoding unit 312 together with the base mesh, the Atlas information, and the like.

The encoding unit 312 executes processing related to V-DMC data encoding. For example, the encoding unit 312 may acquire an original mesh input to the encoding device 300. The encoding unit 312 may acquire the base mesh, the displacement vector, the Atlas information, and the like supplied from the displacement vector generation unit 323. The encoding unit 312 may acquire the attribute map input to the encoding device 300. The encoding unit 312 may encode the Atlas information, the base mesh, the displacement vector, and the attribute map using these pieces of information to generate encoded data of each of the Atlas information, the base mesh, the displacement vector, and the attribute map. The encoding unit 312 may multiplex the encoded data of these pieces of information into a sub stream to generate one bitstream. This bitstream is also referred to as a V-DMC bitstream. The encoding unit 312 may output the generated V-DMC bitstream to the outside of the encoding device 300.

Encoding Unit

Fig. 17 is a block diagram illustrating an example of the main configuration of the encoding unit 312. Note that Fig. 17 illustrates main processing units, data flows, and the like, and those illustrated in Fig. 17 are not necessarily the entire configuration. That is, in the encoding unit 312, a processing unit not illustrated as a block in Fig. 17 may exist, or

processing or a data flow not indicated by an arrow or the like in Fig. 17 may exist.

As illustrated in Fig. 17, the encoding unit 312 includes an Atlas information encoding unit 351, a base mesh encoding unit 352, a displacement vector correction unit 353, a displacement video encoding unit 354, a mesh reconstruction unit 355, an attribute map conversion unit 356, an attribute video encoding unit 357, and a multiplexing unit 358.

The Atlas information encoding unit 351 executes processing related to encoding of Atlas information. For example, the Atlas information encoding unit 351 may acquire the Atlas information supplied from the displacement vector generation unit 323. The Atlas information encoding unit 351 may encode the acquired Atlas information using a predetermined encoding method to generate encoded data of the Atlas information. The Atlas information encoding unit 351 may supply the generated encoded data of the Atlas information to the multiplexing unit 358.

The base mesh encoding unit 352 executes processing related to the encoding of the base mesh. For example, the base mesh encoding unit 352 may acquire the base mesh supplied from the displacement vector generation unit 323. The base mesh encoding unit 352 may quantize the acquired base mesh, encode the base mesh using a predetermined encoding method (such as, for example, Draco), and generate encoded data of the base mesh. The base mesh encoding unit 352 may supply the generated encoded data of the base mesh to the displacement vector correction unit 353. The base mesh encoding unit 352 may supply the generated encoded data of the base mesh to the multiplexing unit 358.

The displacement vector correction unit 353 executes processing related to correction of the displacement vector. For example, the displacement vector correction unit 353 may acquire the base mesh and the displacement vector supplied from the displacement vector generation unit 323. In addition, the displacement vector correction unit 353 may acquire the encoded data of the base mesh supplied from the base mesh encoding unit 352. The displacement vector correction unit 353 may correct the displacement vector based on these pieces of information. For example, the displacement vector correction unit 353 may decode the acquired encoded data of the base mesh, compare the base meshes before and after encoding to obtain encoding distortion of the base mesh, and correct the displacement vector in accordance with the encoding distortion. The displacement vector correction unit 353 may supply the corrected displacement vector to the displacement video encoding unit 354. The displacement vector correction unit 353 may inversely quantize the decoded base mesh and supply the resultant base mesh to the mesh reconstruction unit 355.

The displacement video encoding unit 354 performs processing related to the encoding of the displacement video. The displacement video is a moving image having, as a frame image, a displacement map that is a two-dimensional region where the displacement vector is packed. For example, the displacement video encoding unit 354 may acquire the displacement vector supplied from the displacement vector correction unit 353. The displacement video encoding unit 354 may generate a displacement map by performing wavelet transform on the displacement vector, quantizing the displacement vector, and packing the displacement vector in a two-dimensional region. The displacement video encoding unit 354 may generate a displacement video having the displacement map as a frame image. The displacement video encoding unit 354 may encode the generated displacement video using a predetermined 2D moving image encoding method to generate the encoded data of the displacement video. The displacement video encoding unit 354 may supply the generated encoded data of the displacement video to the multiplexing unit 358. The displacement video encoding unit 354 may decode the generated encoded data of the displacement video, unpack the displacement vector from the displacement map, and inversely quantize the displacement vector. The displacement video encoding unit 354 may provide the inversely quantized displacement vector to the mesh reconstruction unit 355.

The mesh reconstruction unit 355 executes processing related to mesh reconstruction. For example, the mesh reconstruction unit 355 may acquire the base mesh supplied from the displacement vector correction unit 353. The mesh reconstruction unit 355 may acquire the displacement vector supplied from the displacement video encoding unit 354. The mesh reconstruction unit 355 may reconstruct the mesh using these. The mesh reconstruction unit 355 may supply the reconstructed mesh to the attribute map conversion unit 356.

The attribute map conversion unit 356 executes processing related to conversion of the attribute map. For example, the attribute map conversion unit 356 may acquire the reconstructed mesh supplied from the mesh reconstruction unit 355. The attribute map conversion unit 356 may acquire the Atlas information supplied from the displacement vector generation unit 323. The attribute map conversion unit 356 may acquire the original mesh and the attribute map input to the encoding device 300. The attribute map conversion unit 356 may convert the acquired attribute map based on the other information acquired. For example, the attribute map conversion unit 356 may convert the attribute map so as to correspond to the reconstructed mesh based on the Atlas information, the original mesh, or the like. At this time, the attribute map conversion unit 356 may convert the attribute map so as to at least correspond to orthoAtlas. In other words, the attribute map conversion unit 356 generates the converted attribute map. Therefore, the attribute map conversion unit 356 can also be referred to as an attribute map generation unit. The attribute map conversion unit 356 may supply the converted attribute map to the attribute video encoding unit 357.

The attribute video encoding unit 357 executes processing related to the encoding of the attribute video. For example, the attribute video encoding unit 357 may acquire the attribute map supplied from the attribute map conversion unit 356. The attribute video encoding unit 357 may generate the attribute video having the acquired attribute map serving

as the frame image. The attribute video encoding unit 357 may encode the generated attribute video using a predetermined 2D moving image encoding method, to generate the encoded data of the attribute video. The attribute video encoding unit 357 may supply the generated encoded data of the attribute video to the multiplexing unit 358.

The multiplexing unit 358 executes processing related to multiplexing on the encoded data (sub stream). For example, the multiplexing unit 358 may acquire the encoded data of the Atlas information supplied from the Atlas information encoding unit 351. In addition, the multiplexing unit 358 may acquire the encoded data of the base mesh supplied from the base mesh encoding unit 352. The multiplexing unit 358 may acquire the encoded data of the displacement video supplied from the displacement video encoding unit 354. Furthermore, the multiplexing unit 358 may acquire the encoded data of the attribute video supplied from the attribute video encoding unit 357. The multiplexing unit 358 may multiplex the encoded data as a sub stream to generate a V-DMC bitstream. Therefore, the multiplexing unit 358 can also be referred to as a bitstream generation unit. The multiplexing unit 358 may output the generated V-DMC bitstream to the outside of the encoding device 300. For example, the multiplexing unit 358 may supply the V-DMC bitstream to a decoding device 400 described below. Therefore, the multiplexing unit 358 can also be referred to as a supply unit (providing unit) for the V-DMC bitstream.

In the encoding device 300 having such a configuration, the various methods (the present technology) described above in 3. Improvement in UV Coordinate Generation Method may be applied.

For example, method 1 of the present technology may be applied to the encoding device 300 as the first information processing device described above. In this case, in the encoding device 300, the Atlas information generation unit 322 may unfold the base mesh into a two-dimensional region using an unfolding method involving transmission of patch information, and generate, as Atlas information, common patch information that is patch information common to a plurality of frames. The Atlas information encoding unit 351 may encode the Atlas information including the common patch information generated. The attribute map conversion unit 356 may generate an attribute map by mapping the projection image of the texture of the original mesh to a two-dimensional region so as to correspond to the unfolding method using the common patch information generated. The attribute video encoding unit 357 may encode the attribute video having the generated attribute map serving as the frame image. The multiplexing unit 358 may generate a bitstream including the encoded data of the base mesh, the encoded data of the displacement video, the encoded data of the attribute video, and the encoded data of the Atlas information.

Furthermore, method 2 of the present technology may be applied to the encoding device 300 as the first information processing device described above. In this case, in the encoding device 300, the Atlas information generation unit 322 may unfold a base mesh into a two-dimensional region using a first unfolding method involving transmission of patch information, unfold a local region of the base mesh into a two-dimensional region using a second unfolding method different from the first unfolding method, and generate, as Atlas information, patch information for the base mesh unfolded using the first unfolding method and meta information for the local region generated using the second unfolding method. The Atlas information encoding unit 351 may encode the Atlas information including the patch information and the meta information generated. The attribute map conversion unit 356 may generate the attribute map by mapping the projection image of the texture corresponding to the base mesh to the two-dimensional region so as to correspond to the first unfolding method using the patch information generated and mapping the texture corresponding to the local region to the two-dimensional region so as to correspond to the second unfolding method using the meta information generated. The attribute video encoding unit 357 may encode the attribute video having the generated attribute map serving as the frame image. The multiplexing unit 358 may generate a bitstream including the encoded data of the base mesh, the encoded data of the displacement video, the encoded data of the attribute video, and the encoded data of the Atlas information. The local region may be, for example, a portion of the base mesh where the resolution (image quality) of the texture is reduced when the first unfolding method is applied.

Of course, other methods applicable when method 1 or method 2 is applied may be further applied to the encoding device 300.

With this configuration, the encoding device 300 can achieve an effect similar to that described above in 3. Improvement in UV Coordinate Generation Method. Thus, with the encoding device 300, a decrease in the encoding efficiency for 3D data including a base mesh and a displacement vector can be suppressed in a case of applying an unfolding method involving transmission of patch information.

Flow of Encoding Processing

An example of the flow of encoding processing performed by the encoding device 300 will be described with reference to the flowchart of Fig. 18. Note that the flowchart in Fig. 18 illustrates an example of a flow of encoding processing in a case where method 1 of the present technology is applied.

When the encoding processing starts, the mesh decimation unit 321 of the encoding device 300 decimates the original mesh to be encoded in step S301, and generates the base mesh.

In step S302, the Atlas information generation unit 322 generates the Atlas information by applying orthoAtlas to

the base mesh.

In step S303, the Atlas information generation unit 322 generates the common patch information as necessary. Specifically, when the common patch information to be applied to the frame to be processed is not generated, the Atlas information generation unit 322 generates the common patch information. On the other hand, if the common patch information to be applied to the frame to be processed has already been generated, the Atlas information generation unit 322 skips (omits) this processing.

In step S304, the Atlas information generation unit 322 generates the unique patch information as necessary. Specifically, when the patch information unique to the frame to be processed is present, the Atlas information generation unit 322 generates the unique patch information corresponding to the frame to be processed. On the other hand, if there is no patch information unique to the frame to be processed, the Atlas information generation unit 322 skips (omits) this processing.

In step S305, the displacement vector generation unit 323 generates the displacement vector.

In step S306, the encoding unit 312 executes encoding processing on the V-DMC data (Atlas information, base mesh, displacement vector, and attribute map) generated as described above, and generates a V-DMC bitstream.

In step S307, the encoding unit 312 determines whether all the frames have been processed. When there is an unprocessed frame, the processing returns to step S301, and the subsequent processing is executed. Specifically, the processing in steps S301 to S307 is executed for each frame. Then, when it is determined in step S307 that all the frames have been processed (that is, when there is no more frame to be processed), the encoding processing ends.

Flow of Encoding Processing

Next, an example of a flow of the encoding processing executed in step S306 in Fig. 18 will be described with reference to a flowchart in Fig. 19.

When the encoding processing starts, the Atlas information encoding unit 351 encodes the Atlas information including the common patch information in step S311.

In step S312, the base mesh encoding unit 352 encodes the base mesh.

In step S313, the displacement vector correction unit 353 corrects the displacement vectors.

In step S314, the displacement video encoding unit 354 encodes the displacement video having the displacement map, serving as the frame image, in which the corrected displacement vectors are packed.

In step S315, the mesh reconstruction unit 355 reconstructs the mesh.

In step S316, the attribute map conversion unit 356 generates an attribute map corresponding to orthoAtlas using the Atlas information including the common patch information.

In step S317, the attribute video encoding unit 357 encodes the attribute video having the attribute map serving as the frame image.

In step S318, the multiplexing unit 358 multiplexes the encoded data of the Atlas information, the encoded data of the bitstream, the encoded data of the displacement video, and the encoded data of the attribute video to generate the V-DMC bitstream.

When the processing in step S318 ends, the encoding processing in Fig. 19 ends, and the processing returns to Fig. 18.

By executing each processing as described above, the encoding device 300 can apply Method 1. Thus, with the encoding device 300, a decrease in the encoding efficiency for 3D data including a base mesh and a displacement vector can be suppressed in a case of applying an unfolding method involving transmission of patch information.

Flow of Encoding Processing

Another example of the flow of encoding processing performed by the encoding device 300 will be described with reference to the flowchart of Fig. 20. Note that the flowchart in Fig. 20 illustrates an example of a flow of encoding processing in a case where method 2-3 of the present technology is applied.

When the encoding processing starts, the mesh decimation unit 321 of the encoding device 300 decimates the original mesh to be encoded in step S331, and generates the base mesh.

In step S332, the Atlas information generation unit 322 generates the Atlas information by applying orthoAtlas to the entire base mesh.

In step S333, the Atlas information generation unit 322 generates Atlas information by applying UVAtlas to some patches (such as patches in which the quality of textures is compromised) of the base mesh.

In step S334, the displacement vector generation unit 323 generates the displacement vector.

In step S335, the encoding unit 312 executes encoding processing on the V-DMC data (Atlas information, base mesh, displacement vector, and attribute map) generated as described above, and generates a V-DMC bitstream.

In step S336, the encoding unit 312 determines whether all the frames have been processed. When there is an

unprocessed frame, the processing returns to step S331, and the subsequent processing is executed. Specifically, the processing in steps S331 to S336 is executed for each frame. Then, when it is determined in step S336 that all the frames have been processed (that is, when there is no more frame to be processed), the encoding processing ends.

Flow of Encoding Processing

Next, an example of a flow of the encoding processing executed in step S335 in Fig. 20 will be described with reference to a flowchart in Fig. 21.

When the encoding processing starts, the Atlas information encoding unit 351 encodes the Atlas information corresponding to orthoAtlas and UVAtlas in step S341.

In step S342, the base mesh encoding unit 352 encodes the base mesh.

In step S343, the displacement vector correction unit 353 corrects the displacement vectors.

In step S344, the displacement video encoding unit 354 encodes the displacement video having the displacement map, serving as the frame image, in which the corrected displacement vectors are packed.

In step S345, the mesh reconstruction unit 355 reconstructs the mesh.

In step S346, the attribute map conversion unit 356 generates an attribute map including a patch corresponding to orthoAtlas and a patch corresponding to UVAtlas using Atlas information corresponding to orthoAtlas and UVAtlas.

In step S347, the attribute video encoding unit 357 encodes the attribute video having the attribute map serving as the frame image.

In step S348, the multiplexing unit 358 multiplexes the encoded data of the Atlas information, the encoded data of the bitstream, the encoded data of the displacement video, and the encoded data of the attribute video to generate the V-DMC bitstream.

When the processing in step S348 ends, the encoding processing in Fig. 21 ends, and the processing returns to Fig. 20.

By executing each processing as described above, the encoding device 300 can apply method 2-3. Thus, with the encoding device 300, a decrease in the encoding efficiency for 3D data including a base mesh and a displacement vector can be suppressed in a case of applying an unfolding method involving transmission of patch information.

Flow of Encoding Processing

Another example of the flow of encoding processing performed by the encoding device 300 will be described with reference to the flowchart of Fig. 22. Note that the flowchart in Fig. 22 illustrates an example of a flow of encoding processing in a case where method 2-4 of the present technology is applied.

When the encoding processing starts, the mesh decimation unit 321 of the encoding device 300 decimates the original mesh to be encoded in step S361, and generates the base mesh.

In step S362, the Atlas information generation unit 322 generates the Atlas information by applying orthoAtlas to the entire base mesh.

In step S363, the Atlas information generation unit 322 generates Atlas information for arranging textures according to a rule, for some patches (such as patches in which the quality of textures is compromised) of the base mesh.

In step S364, the displacement vector generation unit 323 generates the displacement vector.

In step S365, the encoding unit 312 executes encoding processing on the V-DMC data (Atlas information, base mesh, displacement vector, and attribute map) generated as described above, and generates a V-DMC bitstream.

In step S366, the encoding unit 312 determines whether all the frames have been processed. When there is an unprocessed frame, the processing returns to step S361, and the subsequent processing is executed. Specifically, the processing in steps S361 to S366 is executed for each frame. Then, when it is determined in step S366 that all the frames have been processed (that is, when there is no more frame to be processed), the encoding processing ends.

Flow of Encoding Processing

Next, an example of a flow of the encoding processing executed in step S335 in Fig. 22 will be described with reference to a flowchart in Fig. 23.

When the encoding processing starts, the Atlas information encoding unit 351 encodes the Atlas information corresponding to orthoAtlas and texture regular arrangement in step S371.

In step S372, the base mesh encoding unit 352 encodes the base mesh.

In step S373, the displacement vector correction unit 353 corrects the displacement vectors.

In step S374, the displacement video encoding unit 354 encodes the displacement video having the displacement map, serving as the frame image, in which the corrected displacement vectors are packed.

In step S375, the mesh reconstruction unit 355 reconstructs the mesh.

In step S376, the attribute map conversion unit 356 generates an attribute map including a patch corresponding to orthoAtlas and a triangle arranged according to the rule, by using Atlas information corresponding to orthoAtlas and texture regular arrangement.

In step S377, the attribute video encoding unit 357 encodes the attribute video having the attribute map serving as the frame image.

In step S378, the multiplexing unit 358 multiplexes the encoded data of the Atlas information, the encoded data of the bitstream, the encoded data of the displacement video, and the encoded data of the attribute video to generate the V-DMC bitstream.

When the processing in step S378 ends, the encoding processing in Fig. 23 ends, and the processing returns to Fig. 22.

By executing each processing as described above, the encoding device 300 can apply method 2-4. Thus, with the encoding device 300, a decrease in the encoding efficiency for 3D data including a base mesh and a displacement vector can be suppressed in a case of applying an unfolding method involving transmission of patch information.

## 5. Second Embodiment

### Decoding Device

Fig. 24 is a block diagram illustrating an example of a configuration of the decoding device as an aspect of an information processing device to which the present technology is applied. The decoding device 400 illustrated in Fig. 24 is a device that decodes, for example, the encoded data of the mesh generated in the encoding device 300 (the V-DMC bitstream generated by the multiplexing unit 358).

Fig. 24 illustrates main processing units, data flows, and the like, and those illustrated in Fig. 24 are not necessarily the entire configurations. That is, in the decoding device 400, a processing unit that is not illustrated as a block in Fig. 24 may exist, or processing or a data flow that is not indicated by an arrow or the like in Fig. 24 may exist.

The decoding device 400 decodes the encoded data of the mesh encoded using a method basically similar to the V-DMC described in the above-described non-patent literatures except that the present technology is applied. For example, the decoding device 400 acquires the V-DMC bitstream. This V-DMC bitstream may be generated in the encoding device 300, for example. The decoding device 400 decodes the V-DMC bitstream, reconstructs a mesh (also referred to as a decoding mesh), applies a texture to the decoding mesh, generates a display image for displaying the decoding mesh, and outputs the display image to the outside of the decoding device 400.

As illustrated in Fig. 24, the decoding device 400 includes a demultiplexing unit 411, an Atlas information decoding unit 412, a base mesh decoding unit 413, a base mesh reconstruction unit 414, a subdivision unit 415, a displacement video decoding unit 416, an unpacking unit 417, a displacement vector application unit 418, an attribute video decoding unit 419, and a display processing unit 420.

The demultiplexing unit 411 performs processing related to demultiplexing. For example, the demultiplexing unit 411 may acquire a V-DMC bitstream to be decoded supplied to the decoding device 400. Furthermore, the demultiplexing unit 411 may demultiplex the acquired V-DMC bitstream, and extract the encoded data of the Atlas information, the encoded data of the base mesh, the encoded data of the displacement video, and the encoded data of the attribute video. Therefore, the demultiplexing unit 411 can also be referred to as an acquisition unit for the V-DMC bitstream or various types of information included in the V-DMC bitstream. The demultiplexing unit 411 may supply the extracted encoded data of the Atlas information to the Atlas information decoding unit 412. Further, the demultiplexing unit 411 may supply the extracted encoded data of the base mesh to the base mesh decoding unit 413. Furthermore, the demultiplexing unit 411 may supply the extracted encoded data of the displacement video to the displacement video decoding unit 416. Furthermore, the demultiplexing unit 411 may supply the extracted encoded data of the attribute video to the attribute video decoding unit 419.

The Atlas information decoding unit 412 executes processing related to the decoding of the encoded data of the Atlas information. For example, the Atlas information decoding unit 412 may acquire the encoded data of the Atlas information supplied from the demultiplexing unit 411. The Atlas information decoding unit 412 may decode the encoded data of the Atlas information acquired, using a predetermined decoding method to generate (restore) the Atlas information. The Atlas information decoding unit 412 may supply the generated Atlas information to the base mesh reconstruction unit 414 and the display processing unit 420.

The base mesh decoding unit 413 executes processing related to the decoding of the encoded data of the base mesh. For example, the base mesh decoding unit 413 may acquire the encoded data of the base mesh supplied from the demultiplexing unit 411. The base mesh decoding unit 413 may decode the encoded data of the base mesh acquired, using a predetermined decoding method (for example, Draco or the like) and generate (restore) information (for example, a vertex list, a triangle list, or the like) related to the base mesh. The base mesh decoding unit 413 may supply information on the generated base mesh to the base mesh reconstruction unit 414.

The base mesh reconstruction unit 414 executes processing related to the reconstruction of the base mesh. For example, the base mesh reconstruction unit 414 may acquire information on the base mesh supplied from the base mesh decoding unit 413. The base mesh reconstruction unit 414 may acquire the Atlas information supplied from the Atlas information decoding unit 412. The base mesh reconstruction unit 414 may reconstruct the base mesh using the Atlas information and the information on the base mesh acquired. The base mesh reconstruction unit 414 may supply the generated base mesh to the subdivision unit 415.

The subdivision unit 415 executes processing related to subdivision of a triangle of the base mesh. For example, the subdivision unit 415 may acquire the base mesh supplied from the base mesh reconstruction unit 414. The subdivision unit 415 may subdivide the triangle of the base mesh to generate division points. The subdivision unit 415 may supply the subdivided base mesh to the displacement vector application unit 418.

The displacement video decoding unit 416 executes processing related to the decoding of the encoded data of the displacement video. For example, the displacement video decoding unit 416 may acquire the encoded data of the displacement video supplied from the demultiplexing unit 411. The displacement video decoding unit 416 may decode the encoded data of the displacement video acquired, using a predetermined 2D moving image decoding method to generate (restore) the displacement video. The displacement video decoding unit 416 may supply the generated displacement video to the unpacking unit 417.

The unpacking unit 417 executes processing related to the unpacking of the displacement vector. For example, the unpacking unit 417 may acquire the displacement video supplied from the displacement video decoding unit 416. The unpacking unit 417 may unpack the displacement vector from the displacement map that is the frame image of the displacement video. The unpacking unit 417 may supply the displacement vector obtained in this manner to the displacement vector application unit 418.

The displacement vector application unit 418 executes processing related to application of the displacement vector to the subdivided base mesh. For example, the displacement vector application unit 418 may acquire the subdivided base mesh supplied from the subdivision unit 415. The displacement vector application unit 418 may acquire the displacement vector supplied from the unpacking unit 417. The displacement vector application unit 418 may apply the displacement vector to the division points of the subdivided base mesh. Thus, the displacement vector application unit 418 may generate a decoding mesh. The displacement vector application unit 418 may supply the generated decoding mesh to the display processing unit 420.

The attribute video decoding unit 419 executes processing related to the decoding of the attribute video. For example, the attribute video decoding unit 419 may acquire the encoded data of the attribute video supplied from the demultiplexing unit 411. The attribute video decoding unit 419 may decode the encoded data of the acquired attribute video using a predetermined 2D moving image decoding method to generate (restore) the attribute video. The attribute video decoding unit 419 may supply the attribute map, which is the generated frame image of the attribute video, to the display processing unit 420.

The display processing unit 420 executes processing related to mesh display. For example, the display processing unit 420 may acquire the Atlas information supplied from the Atlas information decoding unit 412. The display processing unit 420 may acquire the decoding mesh supplied from the displacement vector application unit 418. The display processing unit 420 may acquire the attribute map supplied from the attribute video decoding unit 419. The display processing unit 420 may extract a texture from the attribute map using the acquired Atlas information and apply the texture to a face corresponding to the texture in the decoding mesh. That is, the display processing unit 420 may paste the texture to the face. The display processing unit 420 may render the decoding mesh to which the texture is applied, and generate a display image for displaying the decoding mesh to which the texture is applied. Then, the display processing unit 420 may supply the generated display image to the outside of the decoding device 400, and cause another device or the like to display the display image.

In the decoding device 400 having such a configuration, the various methods (the present technology) described above in 3. Improvement in UV Coordinate Generation Method may be applied.

For example, method 1 of the present technology may be applied to the decoding device 400 as the second information processing device described above. In this case, in the decoding device 400, the demultiplexing unit 411 may demultiplex the bitstream and extract the encoded data of the base mesh, the encoded data of the displacement video, the encoded data of the attribute video, and the encoded data of the Atlas information. The Atlas information decoding unit 412 may decode the extracted encoded data of the Atlas information to generate the Atlas information corresponding to the unfolding method involving transmission of patch information and including common patch information that is patch information common to a plurality of frames. Further, the base mesh decoding unit 413 may generate information on the base mesh by decoding the extracted encoded data of the base mesh. The base mesh reconstruction unit 414 may reconstruct the base mesh from the information on the base mesh using the Atlas information. Furthermore, the attribute video decoding unit 419 may generate the attribute map configured as the frame image of the attribute video by decoding the encoded data of the attribute video. The display processing unit 420 may generate the display image by extracting the projection image of the texture of the original mesh mapped to the attribute map so as to correspond to the unfolding

method using the common patch information included in the Atlas information, and applying the projection image to the decoding mesh to perform rendering.

Furthermore, method 2 of the present technology may be applied to the decoding device 400 as the second information processing device described above. In this case, in the decoding device 400, the demultiplexing unit 411 may demultiplex the bitstream and extract the encoded data of the base mesh, the encoded data of the displacement video, the encoded data of the attribute video, and the encoded data of the Atlas information. The Atlas information decoding unit 412 may decode the extracted encoded data of the Atlas information to generate the Atlas information corresponding to the first unfolding method involving transmission of the patch information and the second unfolding method different from the first unfolding method and including patch information for the base mesh unfolded using the first unfolding method and meta information for a local region of the base mesh unfolded using the second unfolding method. Further, the base mesh decoding unit 413 may generate information on the base mesh by decoding the extracted encoded data of the base mesh. The base mesh reconstruction unit 414 may reconstruct the base mesh from the information on the base mesh using the Atlas information. Furthermore, the attribute video decoding unit 419 may generate the attribute map configured as the frame image of the attribute video by decoding the encoded data of the attribute video. The display processing unit 420 may generate the display image by extracting the projection image of the texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to the decoding mesh to perform rendering. The local region may be, for example, a portion of the base mesh where the resolution (image quality) of the texture is reduced when the first unfolding method is applied.

Of course, other methods applicable when method 1 or method 2 is applied may be further applied to the decoding device 400.

With this configuration, the decoding device 400 can achieve an effect similar to that described above in 3. Improvement in UV Coordinate Generation Method. Thus, with the decoding device 400, a decrease in the encoding efficiency for 3D data including a base mesh and a displacement vector can be suppressed in a case of applying an unfolding method involving transmission of patch information.

Flow of Decoding Processing

An example of the flow of decoding processing performed by the decoding device 400 will be described with reference to the flowchart of Fig. 25. Note that the flowchart in Fig. 25 illustrates an example of a flow of encoding processing in a case where method 1 of the present technology is applied.

When the decoding processing starts, the demultiplexing unit 411 of the decoding device 400 demultiplexes the V-DMC bitstream in step S401.

In step S402, the Atlas information decoding unit 412 decodes the encoded data of the Atlas information, and generates (restores) the Atlas information including the common patch information.

In step S403, the base mesh decoding unit 413 decodes the encoded data of the base mesh and generates (restores) information on the base mesh.

In step S404, the base mesh reconstruction unit 414 reconfigures the base mesh using the Atlas information including the common patch information and the information on the base mesh.

In step S405, the subdivision unit 415 subdivides the reconfigured base mesh to generate division points.

In step S406, the displacement video decoding unit 416 decodes the encoded data of the displacement video to generate (restore) a displacement video.

In step S407, the unpacking unit 417 unpacks the displacement map, which is the frame image of the displacement video, and extracts the displacement vector.

In step S408, the displacement vector application unit 418 applies the unpacked displacement vector to the division points of the subdivided base mesh to generate the decoding mesh.

In step S409, the attribute video decoding unit 419 decodes the encoded data of the attribute video and generates (restores) the attribute video.

In step S410, the display processing unit 420 applies the texture extracted from the attribute map, which is the frame image of the attribute video, to the face of the generated decoding mesh using the Atlas information including the common patch information, and renders the decoding mesh to generate the display image.

When the processing of step S410 ends, the decoding processing is completed.

By executing each processing as described above, the decoding device 400 can apply Method 1. Thus, with the decoding device 400, a decrease in the encoding efficiency for 3D data including a base mesh and a displacement vector can be suppressed in a case of applying an unfolding method involving transmission of patch information.

Flow of Decoding Processing

Another example of the flow of decoding processing performed by the decoding device 400 will be described with reference to the flowchart of Fig. 26. Note that the flowchart in Fig. 26 illustrates an example of a flow of encoding processing in a case where method 2-3 of the present technology is applied.

When the decoding processing starts, the demultiplexing unit 411 of the decoding device 400 demultiplexes the V-DMC bitstream in step S431.

In step S432, the Atlas information decoding unit 412 decodes the encoded data of the Atlas information to generate (restore) Atlas information corresponding to orthoAtlas and UVAtlas.

In step S433, the base mesh decoding unit 413 decodes the encoded data of the base mesh and generates (restores) information on the base mesh.

In step S434, the base mesh reconstruction unit 414 reconstructs the base mesh using Atlas information corresponding to orthoAtlas and UVAtlas and information on the base mesh. At this time, for example, for the vertex UV-unfolded using orthoAtlas, the UV coordinates are derived based on the CC id and the patch information.

In step S435, the subdivision unit 415 subdivides the reconfigured base mesh to generate division points.

In step S436, the displacement video decoding unit 416 decodes the encoded data of the displacement video to generate (restore) a displacement video.

In step S437, the unpacking unit 417 unpacks the displacement map, which is the frame image of the displacement video, and extracts the displacement vector.

In step S438, the displacement vector application unit 418 applies the unpacked displacement vector to the division points of the subdivided base mesh to generate the decoding mesh.

In step S439, the attribute video decoding unit 419 decodes the encoded data of the attribute video and generates (restores) the attribute video.

In step S440, the display processing unit 420 applies the texture extracted from the attribute map, which is the frame image of the attribute video, to the face of the generated decoding mesh using the Atlas information corresponding to orthoAtlas and UVAtlas, and renders the decoding mesh to generate the display image.

When the processing of step S440 ends, the decoding processing is completed.

By executing each processing as described above, the decoding device 400 can apply Method 2-3. Thus, with the decoding device 400, a decrease in the encoding efficiency for 3D data including a base mesh and a displacement vector can be suppressed in a case of applying an unfolding method involving transmission of patch information.

Flow of Decoding Processing

Another example of the flow of decoding processing performed by the decoding device 400 will be described with reference to the flowchart of Fig. 27. Note that the flowchart in Fig. 27 illustrates an example of a flow of encoding processing in a case where method 2-4 of the present technology is applied.

When the decoding processing starts, the demultiplexing unit 411 of the decoding device 400 demultiplexes the V-DMC bitstream in step S461.

In step S462, the Atlas information decoding unit 412 decodes the encoded data of the Atlas information to generate (restore) Atlas information corresponding to orthoAtlas and texture regular arrangement.

In step S463, the base mesh decoding unit 413 decodes the encoded data of the base mesh and generates (restores) information on the base mesh.

In step S464, the base mesh reconstruction unit 414 reconstructs the base mesh using Atlas information corresponding to orthoAtlas and the texture regular arrangement and information on the base mesh. At this time, for example, for the vertex UV-unfolded using orthoAtlas, the UV coordinates are derived based on the CC id and the patch information.

In step S465, the subdivision unit 415 subdivides the reconfigured base mesh to generate division points.

In step S466, the displacement video decoding unit 416 decodes the encoded data of the displacement video to generate (restore) a displacement video.

In step S467, the unpacking unit 417 unpacks the displacement map, which is the frame image of the displacement video, and extracts the displacement vector.

In step S468, the displacement vector application unit 418 applies the unpacked displacement vector to the division points of the subdivided base mesh to generate the decoding mesh.

In step S469, the attribute video decoding unit 419 decodes the encoded data of the attribute video and generates (restores) the attribute video.

In step S470, the display processing unit 420 applies the texture extracted from the attribute map, which is the frame image of the attribute video, to the face of the generated decoding mesh using the Atlas information corresponding to orthoAtlas and the texture regular arrangement, and renders the decoding mesh to generate the display image.

When the processing of step S470 ends, the decoding processing is completed.
By executing each processing as described above, the decoding device 400 can apply method 2-4. Thus, with the decoding device 400, a decrease in the encoding efficiency for 3D data including a base mesh and a displacement vector can be suppressed in a case of applying an unfolding method involving transmission of patch information.

## 6. Supplementary Notes

### Polygon Shape

While the shape of the polygon has been described above as a triangle, this shape is an example. The shape of the polygon may be any polygon.

### Application Range of Present Technology

While the V-DMC has been described above as an example of the encoding method to which the present technology is applied, the present technology is not limited to this example, and can be applied to any encoding method as long as the base mesh, the displacement vector, the attribute map including the texture, and the Atlas information, or information corresponding to these is encoded by the encoding method.
In addition, in the above description, orthoAtlas has been described as an example of the UV unfolding method (first unfolding method) to which the present technology is applied, but the first unfolding method is not limited to this example, and may be any unfolding method as long as the unfolding method is an unfolding method involving transmission of patch information.
In the above description, UVAtlas is used as an example of the UV unfolding method (second unfolding method) used in combination with the first unfolding method, but the second unfolding method may be any unfolding method as long as it is different from the first unfolding method. For example, the unfolding method may be an unfolding method involving transmission of coordinate information indicating coordinates of vertices of the base mesh in a two-dimensional region, an unfolding method involving transmission of information on the textures mapped regularly, or another unfolding method.

### Computer

The above-described series of processing operations can be performed by hardware or software. When the series of processing operations is performed by software, a program constituting the software is installed on a computer. Here, the computer includes a computer embedded in dedicated hardware, and, for example, a general-purpose computer or the like that can execute various functions by installing various programs.
Fig. 28 is a block diagram illustrating a configuration example of hardware for a computer that performs the above-described series of processing operations by a program.
In the computer 900 illustrated in Fig. 28, a central processing unit (CPU) 901, a read only memory (ROM) 902, and a random access memory (RAM) 903 are connected to each other via a bus 904.
An input/output interface 910 is also connected to the bus 904. An input unit 911, an output unit 912, a storage unit 913, a communication unit 914, and a drive 915 are connected to the input/output interface 910.
The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disc, a magneto-optical disc, or a semiconductor memory.
In the computer configured as described above, for example, the CPU 901 loads a program stored in the storage unit 913 into the RAM 903 via the input/output interface 910 and the bus 904 and executes the program, thereby performing the series of processing operations described above. The RAM 903 also appropriately stores data necessary for the CPU 901 to perform various processing operations.
The program executed by the computer can be applied by being recorded on the removable medium 921 serving as a package medium or the like, for example. In this case, the program can be installed on the storage unit 913 via the input/output interface 910 by loading the removable medium 921 to the drive 915.
In addition, the program can also be provided via a wired or wireless transmission medium, such as a local area network, the Internet, or digital satellite broadcasting. In this case, the program can be received by the communication unit 914 and installed on the storage unit 913.
In addition, the program can be installed in advance on the ROM 902 or the storage unit 913.

Application Target of Present Technology

The present technology can be applied to any configuration. For example, the present technology can be applied to various electronic apparatuses.

In addition, the present technology can also be implemented as part of a configuration of a device, for example, a processor as system large scale integration (LSI) or the like (e.g., video processor), a module using a plurality of processors or the like (e.g., video module), a unit using a plurality of modules or the like (e.g., video unit), a set including the unit to which other functions are added, or the like (e.g., a video set).

Further, for example, the present technology can also be applied to a network system configured by a plurality of devices. For example, the present technology can also be implemented as cloud computing in which processing is shared and performed collaboratively by a plurality of devices via a network. For example, the present technology may be implemented in a cloud service that provides a service related to images (moving images) to any terminal such as a computer, audio visual (AV) equipment, a portable information processing terminal, and an Internet of Things (IoT) device.

Note that, in this specification, a system means a set of a plurality of components (devices, modules (parts), and the like), and it does not matter whether all the components are in the same housing. Therefore, the system refers to both a plurality of devices housed in separate housings and connected via a network and one device in which a plurality of modules are housed in one housing.

Fields and Applications to Which Present Technology can be Applied

A system, a device, a processing unit, and the like to which the present technology is applied can be used in any field, for example, traffic, medical care, crime prevention, agriculture, livestock industry, mining, beauty care, factories, home appliances, weather, natural surveillance, and the like. In addition, the use thereof is also freely selected.

Others

Note that, in this specification, a "flag" is information for identifying a plurality of states, and includes not only information used for identifying two states of true (1) and false (0) but also information capable of identifying three or more states. Thus, a value that can be taken by such a "flag" may be, for example, two values of 1 and 0, or three or more values. That is, the number of bits constituting the "flag" is freely selected, and may be one bit or multiple bits. In addition, since identification information (including a flag) is assumed to be not only a form in which the identification information is included in a bitstream but also a form in which difference information of the identification information with respect to information serving as a certain reference is included in the bitstream, in this specification, "flag" and "identification information" include not only the information itself but also difference information with respect to the information serving as the reference.

In addition, various types of information (metadata and the like) regarding encoded data (bitstream) may be transmitted or recorded in any form as long as the information is associated with the encoded data. Here, the term "associate" means that, for example, while one piece of data is processed, the other piece of data can be used (linked). That is, pieces of data associated with each other may be collected as one piece of data or may be handled as individual pieces of data. For example, information associated with encoded data (image) may be transmitted on a transmission path different from that of the encoded data (image). Further, for example, the information associated with the encoded data (image) may be recorded in a recording medium different from that for the encoded data (image) (or in a different recording area of the same recording medium). Note that the "association" may be applied to a part of data, instead of an entirety of data. For example, an image and information corresponding to the image may be associated with each other in any unit such as a plurality of frames, one frame, or a part of a frame.

Note that, in this specification, terms such as "synthesize", "multiplex", "add", "integrate", "include", "store", "put in", "plug in", and "insert" mean that a plurality of things are put together into one, for example, encoded data and metadata are put together into one piece of data, and mean one method of the above-described "association".

In addition, embodiments of the present technology are not limited to the above-described embodiments, and various modifications can be made without departing from the gist of the present technology.

For example, a configuration described as one device (or processing unit) may be divided and configured as a plurality of devices (or processing units). Conversely, the configurations described above as a plurality of devices (or processing units) may be integrated into one device (or processing unit). In addition, it is needless to say that a configuration other than the above-described configuration may be added to the configuration of each device (or each processing unit). Furthermore, when the configuration and operation as the entire system are substantially the same, a part of the configuration of a certain device (or processing unit) may be included in the configuration of another device (or another processing unit).

In addition, for example, the above-described program can be executed by any device. In the case above, the

device includes the necessary function (functional block or the like) and can obtain the necessary information.

In addition, for example, each step of one flowchart can be performed by one device or performed by multiple devices in a distributed manner. Further, when a single step includes multiple processing operations, the multiple processing operations may be performed by a single device or may be performed by multiple devices in a distributed manner. In other words, the plurality of processing operations included in one step can be executed as processing operations of a plurality of steps. Conversely, the processing operations described as a plurality of steps can collectively be executed as one step.

In addition, for example, the program executed by a computer may be configured such that the processing operations of the steps describing the program are performed in time series in the order described in this specification, performed in parallel, or in an individual manner at necessary timing such as when being called. That is, the processing of each step may be executed in an order different from the above-described order as long as no contradiction occurs. Further, the processing operations of the steps describing the program may be executed in parallel with the processing operations of another program or may be executed in combination with the processing operations of another program.

In addition, for example, a plurality of technologies related to the present technology can each be implemented independently in a single component as long as no contradiction occurs. Of course, any of the plurality of present technologies can also be implemented in combination. For example, a part or all of the present technologies described in any of the embodiments can be implemented in combination with a part or all of the present technologies described in another embodiment. Further, a part or all of any of the present technologies described above can be implemented in combination with another technology that is not described above.

The present technology may adopt configurations as described below.

(1) An information processing device including:

an Atlas information generation unit configured to unfold a base mesh into a two-dimensional region using an unfolding method involving transmission of patch information, and generate, as Atlas information, common patch information that is the patch information common to a plurality of frames;
an Atlas information encoding unit configured to encode the Atlas information including the common patch information generated;
an attribute map generation unit configured to generate an attribute map by mapping a projection image of a texture of an original mesh to a two-dimensional region so as to correspond to the unfolding method using the common patch information generated;
an attribute video encoding unit configured to encode an attribute video having the attribute map generated serving as a frame image; and
a bitstream generation unit configured to generate a bitstream including encoded data of the base mesh, encoded data of a displacement video, encoded data of the attribute video, and encoded data of the Atlas information, wherein
the base mesh is a mesh generated by decimating vertices from the original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map, and
the patch information is information relating to mapping of a patch of the projection image of the texture.

(2) The information processing device according to (1), wherein the common patch information is information on a large patch that is common to the plurality of frames and includes a plurality of small patches projected in the same direction.
(3) The information processing device according to (2), wherein the common patch information includes at least one of information indicating a projection direction of the large patch, information indicating a rotation angle of the large patch, information indicating a position of the large patch in the two-dimensional region, information indicating a size of the large patch, and information indicating a magnification of the large patch.
(4) The information processing device according to (2) or (3), wherein the Atlas information generation unit further generates, as the Atlas information, unique patch information that is the patch information unique to a frame.
(5) The information processing device according to (4), wherein the unique patch information includes information indicating displacement between frames of the large patch corresponding to the common patch information.
(6) The information processing device according to (4) or (5), wherein the unique patch information includes

information on the small patch included in the large patch corresponding to the common patch information.
(7) The information processing device according to any one of (4) to (6), wherein the unique patch information includes information on the small patch located outside the large patch corresponding to the common patch information.
(8) The information processing device according to any one of (1) to (7), wherein

the Atlas information generation unit

unfolds the base mesh into a two-dimensional region using a first unfolding method involving transmission of the patch information,
unfolds the local region of the base mesh into a two-dimensional region using a second unfolding method different from the first unfolding method, and
generates, as the Atlas information, the common patch information for the base mesh unfolded using the first unfolding method and the meta information for the local region generated using the second unfolding method, and

the attribute map generation unit generates the attribute map by mapping the projection image corresponding to the base mesh so as to correspond to the first unfolding method using the common patch information generated, and mapping the texture corresponding to the local region so as to correspond to the second unfolding method using the meta information generated.

(9) The information processing device according to (8), wherein the Atlas information generation unit

unfolds an entirety of the base mesh into the two-dimensional region using the first unfolding method, and unfolds the local region into the two-dimensional region using the second unfolding method.

(10) The information processing device according to (8), wherein the Atlas information generation unit

unfolds the base mesh, excluding the local region, into the two-dimensional region using the first unfolding method, and
unfolds the local region into the two-dimensional region using the second unfolding method.

(11) The information processing device according to any one of (8) to (10), wherein

the second unfolding method is an unfolding method involving transmission of coordinate information indicating coordinates of vertices of the base mesh in the two-dimensional region, and
the attribute map generation unit maps the projection image of the texture corresponding to the local region to the attribute map so as to correspond to the second unfolding method using the meta information generated.

(12) The information processing device according to (11), wherein the Atlas information generation unit generates, as the meta information, the coordinate information for each vertex in the local region.
(13) The information processing device according to (11) or (12), wherein the Atlas information generation unit generates, as the meta information, identification information on each face, the coordinate information on each vertex, and information on each connection in the local region.
(14) The information processing device according to any one of (8) to (13), wherein

the second unfolding method is an unfolding method involving transmission of information on the texture mapped regularly,
the Atlas information generation unit generates information on the texture as the meta information, and
the attribute map generation unit regularly maps the texture corresponding to a face of the base mesh to the attribute map using the information generated on the texture.

(15) The information processing device according to (14), wherein the information on the texture includes a list of identification information of the face corresponding to the texture mapped regularly.
(16) The information processing device according to (14), wherein the information on the texture includes a list of identification information of the patch to which the face corresponding to the texture mapped regularly belongs.
(17) The information processing device according to any one of (14) to (16), wherein the information on the texture includes a list of identification information of the face corresponding to the texture mapped regularly and a parameter on a region to which the texture is mapped regularly.

(18) The information processing device according to (17), wherein the parameter includes information indicating a length of a side of the region.
(19) The information processing device according to (17) or (18), wherein the parameter includes information indicating a length of a side of the region for each resolution.
(20) The information processing device according to any one of (17) to (19), wherein the parameter includes information indicating the number of the regions for each resolution.
(21) The information processing device according to any one of (17) to (20), wherein the parameter includes information indicating a length of an interval of the texture mapped regularly.
(22) An information processing method including:

unfolding a base mesh into a two-dimensional region using an unfolding method involving transmission of patch information, and generating, as Atlas information, common patch information that is the patch information common to a plurality of frames;
encoding the Atlas information including the common patch information generated;
generating an attribute map by mapping a projection image of a texture of an original mesh to a two-dimensional region so as to correspond to the unfolding method using the common patch information generated;
encoding an attribute video having the attribute map generated serving as a frame image; and
generating a bitstream including encoded data of the base mesh, encoded data of a displacement video, encoded data of the attribute video, and encoded data of the Atlas information, wherein
the base mesh is a mesh generated by decimating vertices from the original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map, and
the patch information is information relating to mapping of a patch of the projection image of the texture.

(31) An information processing device including:

a demultiplexing unit configured to demultiplex a bitstream to extract encoded data of a base mesh, encoded data of a displacement video, encoded data of an attribute video, and encoded data of Atlas information;
an Atlas information decoding unit configured to decode the extracted encoded data of the Atlas information to generate the Atlas information corresponding to an unfolding method involving transmission of patch information and including common patch information that is the patch information common to a plurality of frames;
a base mesh decoding unit configured to decode the extracted encoded data of the base mesh to generate information on the base mesh;
a base mesh reconstruction unit configured to reconstruct the base mesh from the information on the base mesh using the Atlas information;
an attribute video decoding unit configured to decode the encoded data of the attribute video to generate an attribute map configured as a frame image of the attribute video; and
a display processing unit configured to generate a display image by extracting a projection image of a texture of an original mesh mapped to the attribute map so as to correspond to the unfolding method using the common patch information included in the Atlas information and applying the projection image to a decoding mesh to perform rendering, wherein
the base mesh is a mesh generated by decimating vertices from the original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map,
the patch information is information relating to mapping of a patch of the projection image of the texture, and
the decoding mesh is generated by applying the displacement vector derived from the encoded data of the displacement video to the base mesh reconstructed.

(32) The information processing device according to (31), wherein the common patch information is information on a large patch that is common to the plurality of frames and includes a plurality of small patches projected in the same direction.

(33) The information processing device according to (32), wherein the common patch information includes at least one of information indicating a projection direction of the large patch, information indicating a rotation angle of the large patch, information indicating a position of the large patch in the two-dimensional region, information indicating a size of the large patch, and information indicating a magnification of the large patch.

(34) The information processing device according to (32) or (33), wherein

the Atlas information further includes unique patch information that is the patch information unique to a frame, and the display processing unit generates the display image by extracting the projection image using the common patch information and the unique patch information included in the Atlas information, and applying the projection image to the decoding mesh to perform rendering.

(35) The information processing device according to (34), wherein the unique patch information includes information indicating displacement between frames of the large patch corresponding to the common patch information.

(36) The information processing device according to (34) or (35), wherein the unique patch information includes information on the small patch included in the large patch corresponding to the common patch information.

(37) The information processing device according to any one of (34) to (36), wherein the unique patch information includes information on the small patch located outside the large patch corresponding to the common patch information.

(38) The information processing device according to any one of (31) to (37), wherein

the Atlas information decoding unit decodes the extracted encoded data of the Atlas information to generate the Atlas information corresponding to a first unfolding method involving transmission of the patch information and a second unfolding method different from the first unfolding method and including the common patch information for the base mesh unfolded using the first unfolding method and meta information for a local region of the base mesh unfolded using the second unfolding method, and
the display processing unit

extracts the texture corresponding to the base mesh mapped to the attribute map so as to correspond to the first unfolding method using the common patch information included in the Atlas information,
extracts the texture corresponding to the local region mapped to the attribute map so as to correspond to the second unfolding method using the meta information included in the Atlas information, and
generates the display image by applying the projection image and the texture extracted to the decoding mesh to perform rendering.

(39) The information processing device according to (38), wherein

the Atlas information decoding unit decodes the extracted encoded data of the Atlas information to generate the Atlas information corresponding to the first unfolding method and the second unfolding method and including the common patch information for an entirety of the base mesh unfolded using the first unfolding method and the meta information for the local region unfolded using the second unfolding method, and
the display processing unit

extracts the texture corresponding to the entirety of the base mesh mapped to the attribute map so as to correspond to the first unfolding method using the common patch information included in the Atlas information,
extracts the texture corresponding to the local region mapped to the attribute map so as to correspond to the second unfolding method using the meta information included in the Atlas information, and
generates the display image by applying the projection image and the texture extracted to the decoding mesh to perform rendering.

(40) The information processing device according to (38), wherein

the Atlas information decoding unit decodes the extracted encoded data of the Atlas information to generate the Atlas information corresponding to the first unfolding method and the second unfolding method and including the common patch information for the base mesh, excluding the local region, unfolded using the first unfolding

method and the meta information for the local region unfolded using the second unfolding method, and the display processing unit

extracts the texture corresponding to the base mesh, excluding the local region, mapped to the attribute map so as to correspond to the first unfolding method using the common patch information included in the Atlas information,
extracts the texture corresponding to the local region mapped to the attribute map so as to correspond to the second unfolding method using the meta information included in the Atlas information, and
generates the display image by applying the projection image and the texture extracted to the decoding mesh to perform rendering.

(41) The information processing device according to any one of (38) to (40), wherein

the second unfolding method is an unfolding method involving transmission of coordinate information indicating coordinates of vertices of the base mesh in the two-dimensional region, and
the Atlas information decoding unit decodes the extracted encoded data of the Atlas information to generate the Atlas information including the coordinate information as the meta information.

(42) The information processing device according to (41), wherein the Atlas information decoding unit decodes the extracted encoded data of the Atlas information to generate the Atlas information including the coordinate information for each vertex in the local region as the meta information.
(43) The information processing device according to (41) or (42), wherein the Atlas information decoding unit decodes the extracted encoded data of the Atlas information to generate the Atlas information including, as the meta information, identification information on each face, the coordinate information on each vertex, and information on each connection in the local region.
(44) The information processing device according to any one of (38) to (43), wherein

the second unfolding method is an unfolding method involving transmission of information on the texture mapped regularly,
the Atlas information decoding unit decodes the extracted encoded data of the Atlas information to generate the Atlas information including the information on the texture as the meta information, and
the display processing unit extracts the texture corresponding to the face of the base mesh mapped regularly to the attribute map so as to correspond to the second unfolding method using the meta information included in the Atlas information.

(45) The information processing device according to (44), wherein the information on the texture includes a list of identification information of the face corresponding to the texture mapped regularly.
(46) The information processing device according to (44), wherein the information on the texture includes a list of identification information of the patch to which the face corresponding to the texture mapped regularly belongs.
(47) The information processing device according to any one of (44) to (46), wherein the information on the texture includes a list of identification information of the face corresponding to the texture mapped regularly and a parameter on a region to which the texture is mapped regularly.
(48) The information processing device according to (47), wherein the parameter includes information indicating a length of a side of the region.
(49) The information processing device according to (47) or (48), wherein the parameter includes information indicating a length of a side of the region for each resolution.
(50) The information processing device according to any one of (47) to (49), wherein the parameter includes information indicating the number of the regions for each resolution.
(51) The information processing device according to any one of (47) to (50), wherein the parameter includes information indicating a length of an interval of the texture mapped regularly.
(52) An information processing method including:

demultiplexing a bitstream to extract encoded data of a base mesh, encoded data of a displacement video, encoded data of an attribute video, and encoded data of Atlas information;
decoding the extracted encoded data of the Atlas information to generate the Atlas information corresponding to an unfolding method involving transmission of patch information and including common patch information that is the patch information common to a plurality of frames;
decoding the extracted encoded data of the base mesh to generate information on the base mesh;

reconstructing the base mesh from the information on the base mesh using the Atlas information;
decoding the encoded data of the attribute video to generate an attribute map configured as a frame image of the attribute video; and
generating a display image by extracting a projection image of a texture of an original mesh mapped to the attribute map so as to correspond to the unfolding method using the common patch information included in the Atlas information and applying the projection image to a decoding mesh to perform rendering, wherein
the base mesh is a mesh generated by decimating vertices from the original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map,
the patch information is information relating to mapping of a patch of the projection image of the texture, and
the decoding mesh is generated by applying the displacement vector derived from the encoded data of the displacement video to the base mesh reconstructed.

(61) An information processing device including:

an Atlas information generation unit configured to unfold a base mesh into a two-dimensional region using a first unfolding method involving transmission of patch information, unfold a local region of the base mesh into a two-dimensional region using a second unfolding method different from the first unfolding method, and generate, as Atlas information, the patch information for the base mesh unfolded using the first unfolding method and meta information for the local region generated using the second unfolding method;
an Atlas information encoding unit configured to encode the Atlas information including the patch information and the meta information generated;
an attribute map generation unit configured to generate an attribute map by mapping a projection image of a texture corresponding to the base mesh to a two-dimensional region so as to correspond to the first unfolding method using the patch information generated and mapping the texture corresponding to the local region to a two-dimensional region so as to correspond to the second unfolding method using the meta information generated;
an attribute video encoding unit configured to encode an attribute video having the attribute map generated serving as a frame image; and
a bitstream generation unit configured to generate a bitstream including encoded data of the base mesh, encoded data of a displacement video, encoded data of the attribute video, and encoded data of the Atlas information, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map, and
the patch information is information relating to mapping of a patch of the projection image of the texture.

(62) The information processing device according to (61), wherein the Atlas information generation unit

unfolds an entirety of the base mesh into the two-dimensional region using the first unfolding method, and
unfolds the local region into the two-dimensional region using the second unfolding method.

(63) The information processing device according to (61), wherein the Atlas information generation unit

unfolds the base mesh, excluding the local region, into the two-dimensional region using the first unfolding method, and
unfolds the local region into the two-dimensional region using the second unfolding method.

(64) The information processing device according to any one of (61) to (63), wherein

the second unfolding method is an unfolding method involving transmission of coordinate information indicating coordinates of vertices of the base mesh in the two-dimensional region, and
the attribute map generation unit maps the projection image of the texture corresponding to the local region to the attribute map so as to correspond to the second unfolding method using the meta information generated.

(65) The information processing device according to (64), wherein the Atlas information generation unit generates, as the meta information, the coordinate information for each vertex in the local region.
(66) The information processing device according to (64) or (65), wherein the Atlas information generation unit generates, as the meta information, identification information on each face, the coordinate information on each vertex, and information on each connection in the local region.
(67) The information processing device according to any one of (61) to (66), wherein

the second unfolding method is an unfolding method involving transmission of information on the texture mapped regularly,
the Atlas information generation unit generates information on the texture as the meta information, and
the attribute map generation unit regularly maps the texture corresponding to a face of the base mesh to the attribute map using the information generated on the texture.

(68) The information processing device according to (67), wherein the information on the texture includes a list of identification information of the face corresponding to the texture mapped regularly.
(69) The information processing device according to (67), wherein the information on the texture includes a list of identification information of the patch to which the face corresponding to the texture mapped regularly belongs.
(70) The information processing device according to any one of (67) to (69), wherein the information on the texture includes a list of identification information of the face corresponding to the texture mapped regularly and a parameter on a region to which the texture is mapped regularly.
(71) The information processing device according to (70), wherein the parameter includes information indicating a length of a side of the region.
(72) The information processing device according to (70) or (71), wherein the parameter includes information indicating a length of a side of the region for each resolution.
(73) The information processing device according to any one of (70) to (72), wherein the parameter includes information indicating the number of the regions for each resolution.
(74) The information processing device according to any one of (70) to (73), wherein the parameter includes information indicating a length of an interval of the texture mapped regularly.
(75) The information processing device according to any one of (61) to (74), wherein

the Atlas information generation unit generates, as the Atlas information, common patch information that is the patch information common to a plurality of frames for the base mesh unfolded using the first unfolding method, and
the attribute map generation unit maps the projection image corresponding to the base mesh so as to correspond to the first unfolding method using the common patch information generated.

(76) The information processing device according to (75), wherein the common patch information is information on a large patch that is common to the plurality of frames and includes a plurality of small patches projected in the same direction.
(77) The information processing device according to (76), wherein the common patch information includes at least one of information indicating a projection direction of the large patch, information indicating a rotation angle of the large patch, information indicating a position of the large patch in the two-dimensional region, information indicating a size of the large patch, and information indicating a magnification of the large patch.
(78) The information processing device according to (76) or (77), wherein the Atlas information generation unit further generates, as the Atlas information, unique patch information that is the patch information unique to a frame.
(79) The information processing device according to (78), wherein the unique patch information includes information indicating displacement between frames of the large patch corresponding to the common patch information.
(80) The information processing device according to (78) or (79), wherein the unique patch information includes information on the small patch included in the large patch corresponding to the common patch information.
(81) The information processing device according to any one of (78) to (80), wherein the unique patch information includes information on the small patch located outside the large patch corresponding to the common patch information.
(82) An information processing method including:

unfolding a base mesh into a two-dimensional region using a first unfolding method involving transmission of patch information, unfolding a local region of the base mesh into a two-dimensional region using a second unfolding method different from the first unfolding method, and generating, as Atlas information, the patch information for the base mesh unfolded using the first unfolding method and meta information for the local region generated using the second unfolding method;
encoding the Atlas information including the patch information and the meta information generated;
generating an attribute map by mapping a projection image of a texture corresponding to the base mesh to a two-dimensional region so as to correspond to the first unfolding method using the patch information generated and mapping the texture corresponding to the local region to a two-dimensional region so as to correspond to the second unfolding method using the meta information generated;
encoding an attribute video having the attribute map generated serving as a frame image; and
generating a bitstream including encoded data of the base mesh, encoded data of a displacement video, encoded data of the attribute video, and encoded data of the Atlas information, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map, and
the patch information is information relating to mapping of a patch of the projection image of the texture.

(91) An information processing device including:

a demultiplexing unit configured to demultiplex a bitstream to extract encoded data of a base mesh, encoded data of a displacement video, encoded data of an attribute video, and encoded data of Atlas information;
an Atlas information decoding unit configured to decode the extracted encoded data of the Atlas information to generate the Atlas information corresponding to a first unfolding method involving transmission of patch information and a second unfolding method different from the first unfolding method and including the patch information for the base mesh unfolded using the first unfolding method and meta information for a local region of the base mesh unfolded using the second unfolding method;
a base mesh decoding unit configured to decode the extracted encoded data of the base mesh to generate information on the base mesh;
a base mesh reconstruction unit configured to reconstruct the base mesh from the information on the base mesh using the Atlas information;
an attribute video decoding unit configured to decode the encoded data of the attribute video to generate an attribute map configured as a frame image of the attribute video; and
a display processing unit configured to generate a display image by extracting a projection image of a texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to a decoding mesh to perform rendering, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map,
the patch information is information relating to mapping of a patch of the projection image of the texture, and
the decoding mesh is generated by applying the displacement vector derived from the encoded data of the displacement video to the base mesh reconstructed.

(92) The information processing device according to (91), wherein

the Atlas information decoding unit decodes the extracted encoded data of the Atlas information to generate the Atlas information corresponding to the first unfolding method and the second unfolding method and including the patch information for an entirety of the base mesh unfolded using the first unfolding method and the meta information for the local region unfolded using the second unfolding method, and
the display processing unit

extracts the texture corresponding to the entire base mesh mapped to the attribute map so as to correspond to the first unfolding method using the patch information included in the Atlas information,
extracts the texture corresponding to the local region mapped to the attribute map so as to correspond to the second unfolding method using the meta information included in the Atlas information, and
generates the display image by applying the projection image and the texture extracted to the decoding mesh to perform rendering.

(93) The information processing device according to (91), wherein

the Atlas information decoding unit decodes the extracted encoded data of the Atlas information to generate the Atlas information corresponding to the first unfolding method and the second unfolding method and including the patch information for the base mesh, excluding the local region, unfolded using the first unfolding method and the meta information for the local region unfolded using the second unfolding method, and
the display processing unit

extracts the texture corresponding to the base mesh, excluding the local region, mapped to the attribute map so as to correspond to the first unfolding method using the patch information included in the Atlas information,
extracts the texture corresponding to the local region mapped to the attribute map so as to correspond to the second unfolding method using the meta information included in the Atlas information, and
generates the display image by applying the projection image and the texture extracted to the decoding mesh to perform rendering.

(94) The information processing device according to any one of (91) to (93), wherein

the second unfolding method is an unfolding method involving transmission of coordinate information indicating coordinates of vertices of the base mesh in the two-dimensional region, and
the Atlas information decoding unit decodes the extracted encoded data of the Atlas information to generate the Atlas information including the coordinate information as the meta information.

(95) The information processing device according to (94), wherein the Atlas information decoding unit decodes the extracted encoded data of the Atlas information to generate the Atlas information including the coordinate information for each vertex in the local region as the meta information.
(96) The information processing device according to (94), wherein the Atlas information decoding unit decodes the extracted encoded data of the Atlas information to generate the Atlas information including, as the meta information, identification information on each face, the coordinate information on each vertex, and information on each connection in the local region.
(97) The information processing device according to any one of (91) to (96), wherein

the second unfolding method is an unfolding method involving transmission of information on the texture mapped regularly,
the Atlas information decoding unit decodes the extracted encoded data of the Atlas information to generate the Atlas information including the information on the texture as the meta information, and
the display processing unit extracts the texture corresponding to the face of the base mesh mapped regularly to the attribute map so as to correspond to the second unfolding method using the meta information included in the Atlas information.

(98) The information processing device according to (97), wherein the information on the texture includes a list of identification information of the face corresponding to the texture mapped regularly.
(99) The information processing device according to (97), wherein the information on the texture includes a list of identification information of the patch to which the face corresponding to the texture mapped regularly belongs.
(100) The information processing device according to any one of (97) to (99), wherein the information on the texture includes a list of identification information of the face corresponding to the texture mapped regularly and a parameter

on a region to which the texture is mapped regularly.

(101) The information processing device according to (100), wherein the parameter includes information indicating a length of a side of the region.

(102) The information processing device according to (100) or (101), wherein the parameter includes information indicating a length of a side of the region for each resolution.

(103) The information processing device according to any one of (100) to (102), wherein the parameter includes information indicating the number of the regions for each resolution.

(104) The information processing device according to (100) to (103), wherein the parameter includes information indicating a length of an interval of the texture mapped regularly.

(105) The information processing device according to any one of (91) to (104), wherein

the Atlas information decoding unit decodes the extracted encoded data of the Atlas information to generate the Atlas information including common patch information that is the patch information common to a plurality of frames for the base mesh unfolded using the first unfolding method, and

the display processing unit extracts the texture corresponding to the base mesh mapped to the attribute map so as to correspond to the first unfolding method using the common patch information included in the Atlas information.

(106) The information processing device according to (105), wherein the common patch information is information on a large patch that is common to the plurality of frames and includes a plurality of small patches projected in the same direction.

(107) The information processing device according to (106), wherein the common patch information includes at least one of information indicating a projection direction of the large patch, information indicating a rotation angle of the large patch, information indicating a position of the large patch in the two-dimensional region, information indicating a size of the large patch, and information indicating a magnification of the large patch.

(108) The information processing device according to (106) or (107), wherein

the Atlas information further includes unique patch information that is the patch information unique to a frame, and

the display processing unit generates the display image by extracting the projection image using the common patch information and the unique patch information included in the Atlas information, and applying the projection image to the decoding mesh to perform rendering.

(109) The information processing device according to (108), wherein the unique patch information includes information indicating displacement between frames of the large patch corresponding to the common patch information.

(110) The information processing device according to (108) or (109), wherein the unique patch information includes information on the small patch included in the large patch corresponding to the common patch information.

(111) The information processing device according to any one of (108) to (110), wherein the unique patch information includes information on the small patch located outside the large patch corresponding to the common patch information.

(112) An information processing method including:

demultiplexing a bitstream to extract encoded data of a base mesh, encoded data of a displacement video, encoded data of an attribute video, and encoded data of Atlas information;

decoding the extracted encoded data of the Atlas information to generate the Atlas information corresponding to a first unfolding method involving transmission of patch information and a second unfolding method different from the first unfolding method and including the patch information for the base mesh unfolded using the first unfolding method and meta information for a local region of the base mesh unfolded using the second unfolding method;

decoding the extracted encoded data of the base mesh to generate information on the base mesh;

reconstructing the base mesh from the information on the base mesh using the Atlas information;

decoding the encoded data of the attribute video to generate an attribute map configured as a frame image of the attribute video; and

generating a display image by extracting a projection image of a texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to a decoding mesh to perform rendering, wherein

the base mesh is a mesh generated by decimating vertices from an original mesh to be encoded including the vertices and connections expressing a three-dimensional structure of an object, and having a lower definition than

the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map,
the patch information is information relating to mapping of a patch of the projection image of the texture, and
the decoding mesh is generated by applying the displacement vector derived from the encoded data of the displacement video to the base mesh reconstructed.

Reference Signs List

300 encoding device, 311 preprocessing unit, 312 encoding unit, 321 mesh decimation unit, 322 Atlas information generation unit, 323 displacement vector generation unit, 351 Atlas information encoding unit, 352 base mesh encoding unit, 353 displacement vector correction unit, 354 displacement video encoding unit, 355 mesh reconstruction unit, 356 attribute map conversion unit, 357 attribute video encoding unit, 358 multiplexing unit, 400 decoding device, 411 demultiplexing unit, 412 Atlas information decoding unit, 413 base mesh decoding unit, 414 base mesh reconstruction unit, 415 subdivision unit, 416 displacement video decoding unit, 417 unpacking unit, 418 displacement vector application unit, 419 attribute video decoding unit, 420 display processing unit, 900 computer

## Claims

**1.** An information processing device comprising:

an Atlas information generation unit configured to unfold a base mesh into a two-dimensional region using a first unfolding method involving transmission of patch information, unfold a local region of the base mesh into a two-dimensional region using a second unfolding method different from the first unfolding method, and generate, as Atlas information, the patch information for the base mesh unfolded using the first unfolding method and meta information for the local region generated using the second unfolding method;
an Atlas information encoding unit configured to encode the Atlas information including the patch information and the meta information generated;
an attribute map generation unit configured to generate an attribute map by mapping a projection image of a texture corresponding to the base mesh to a two-dimensional region so as to correspond to the first unfolding method using the patch information generated and mapping the texture corresponding to the local region to a two-dimensional region so as to correspond to the second unfolding method using the meta information generated;
an attribute video encoding unit configured to encode an attribute video having the attribute map generated serving as a frame image; and
a bitstream generation unit configured to generate a bitstream including encoded data of the base mesh, encoded data of a displacement video, encoded data of the attribute video, and encoded data of the Atlas information, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map, and
the patch information is information relating to mapping of a patch of the projection image of the texture.

**2.** The information processing device according to claim 1, wherein the Atlas information generation unit

unfolds an entirety of the base mesh into the two-dimensional region using the first unfolding method, and
unfolds the local region into the two-dimensional region using the second unfolding method.

**3.** The information processing device according to claim 1, wherein the Atlas information generation unit

unfolds the base mesh, excluding the local region, into the two-dimensional region using the first unfolding method, and
unfolds the local region into the two-dimensional region using the second unfolding method.

**4.** The information processing device according to claim 1, wherein

the second unfolding method is an unfolding method involving transmission of coordinate information indicating coordinates of vertices of the base mesh in the two-dimensional region, and
the attribute map generation unit maps the projection image of the texture corresponding to the local region to the attribute map so as to correspond to the second unfolding method using the meta information generated.

**5.** The information processing device according to claim 4, wherein the Atlas information generation unit generates, as the meta information, the coordinate information for each vertex in the local region.

**6.** The information processing device according to claim 4, wherein the Atlas information generation unit generates, as the meta information, identification information on each face, the coordinate information on each vertex, and information on each connection in the local region.

**7.** The information processing device according to claim 1, wherein

the second unfolding method is an unfolding method involving transmission of information on the texture mapped regularly,
the Atlas information generation unit generates information on the texture as the meta information, and
the attribute map generation unit regularly maps the texture corresponding to a face of the base mesh to the attribute map using the information generated on the texture.

**8.** The information processing device according to claim 7, wherein the information on the texture includes a list of identification information of the face corresponding to the texture mapped regularly.

**9.** The information processing device according to claim 7, wherein the information on the texture includes a list of identification information of the patch to which the face corresponding to the texture mapped regularly belongs.

**10.** The information processing device according to claim 7, wherein the information on the texture includes a list of identification information of the face corresponding to the texture mapped regularly and a parameter on a region to which the texture is mapped regularly.

**11.** The information processing device according to claim 10, wherein the parameter includes information indicating a length of a side of the region.

**12.** The information processing device according to claim 10, wherein the parameter includes information indicating a length of a side of the region for each resolution.

**13.** The information processing device according to claim 10, wherein the parameter includes information indicating the number of the regions for each resolution.

**14.** The information processing device according to claim 10, wherein the parameter includes information indicating a length of an interval of the texture mapped regularly.

**15.** The information processing device according to claim 1, wherein

the Atlas information generation unit generates, as the Atlas information, common patch information that is the patch information common to a plurality of frames for the base mesh unfolded using the first unfolding method, and
the attribute map generation unit maps the projection image corresponding to the base mesh so as to correspond to the first unfolding method using the common patch information generated.

**16.** The information processing device according to claim 15, wherein the common patch information is information on a large patch that is common to the plurality of frames and includes a plurality of small patches projected in the same

direction.

**17.** The information processing device according to claim 16, wherein the Atlas information generation unit further generates, as the Atlas information, unique patch information that is the patch information unique to a frame.

**18.** An information processing method comprising:

unfolding a base mesh into a two-dimensional region using a first unfolding method involving transmission of patch information, unfolding a local region of the base mesh into a two-dimensional region using a second unfolding method different from the first unfolding method, and generating, as Atlas information, the patch information for the base mesh unfolded using the first unfolding method and meta information for the local region generated using the second unfolding method;
encoding the Atlas information including the patch information and the meta information generated;
generating an attribute map by mapping a projection image of a texture corresponding to the base mesh to a two-dimensional region so as to correspond to the first unfolding method using the patch information generated and mapping the texture corresponding to the local region to a two-dimensional region so as to correspond to the second unfolding method using the meta information generated;
encoding an attribute video having the attribute map generated serving as a frame image; and
generating a bitstream including encoded data of the base mesh, encoded data of a displacement video, encoded data of the attribute video, and encoded data of the Atlas information, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map, and
the patch information is information relating to mapping of a patch of the projection image of the texture.

**19.** An information processing device comprising:

a demultiplexing unit configured to demultiplex a bitstream to extract encoded data of a base mesh, encoded data of a displacement video, encoded data of an attribute video, and encoded data of Atlas information;
an Atlas information decoding unit configured to decode the extracted encoded data of the Atlas information to generate the Atlas information corresponding to a first unfolding method involving transmission of patch information and a second unfolding method different from the first unfolding method and including the patch information for the base mesh unfolded using the first unfolding method and meta information for a local region of the base mesh unfolded using the second unfolding method;
a base mesh decoding unit configured to decode the extracted encoded data of the base mesh to generate information on the base mesh;
a base mesh reconstruction unit configured to reconstruct the base mesh from the information on the base mesh using the Atlas information;
an attribute video decoding unit configured to decode the encoded data of the attribute video to generate an attribute map configured as a frame image of the attribute video; and
a display processing unit configured to generate a display image by extracting a projection image of a texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to a decoding mesh to perform rendering, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspon-

dence between the base mesh, and the displacement map and the attribute map,
the patch information is information relating to mapping of a patch of the projection image of the texture, and
the decoding mesh is generated by applying the displacement vector derived from the encoded data of the displacement video to the base mesh reconstructed.

**20.** An information processing method comprising:

demultiplexing a bitstream to extract encoded data of a base mesh, encoded data of a displacement video, encoded data of an attribute video, and encoded data of Atlas information;
decoding the extracted encoded data of the Atlas information to generate the Atlas information corresponding to a first unfolding method involving transmission of patch information and a second unfolding method different from the first unfolding method and including the patch information for the base mesh unfolded using the first unfolding method and meta information for a local region of the base mesh unfolded using the second unfolding method;
decoding the extracted encoded data of the base mesh to generate information on the base mesh;
reconstructing the base mesh from the information on the base mesh using the Atlas information;
decoding the encoded data of the attribute video to generate an attribute map configured as a frame image of the attribute video; and
generating a display image by extracting a projection image of a texture corresponding to the base mesh mapped to the attribute map so as to correspond to the first unfolding method using the patch information included in the Atlas information, extracting the texture corresponding to the local region mapped to the attribute map so as to correspond to the second unfolding method using the meta information included in the Atlas information, and applying the projection image and the texture extracted to a decoding mesh to perform rendering, wherein
the base mesh is a mesh generated by decimating vertices from an original mesh to be encoded including the vertices and connections expressing a three-dimensional structure of an object, and having a lower definition than the original,
the displacement video is a moving image having a displacement map serving as a frame image, the displacement map being a two-dimensional region in which displacement vectors indicating displacement of division points that are vertices generated by subdividing the base mesh are packed,
the Atlas information is information used for mesh reconstruction and includes information indicating correspondence between the base mesh, and the displacement map and the attribute map,
the patch information is information relating to mapping of a patch of the projection image of the texture, and
the decoding mesh is generated by applying the displacement vector derived from the encoded data of the displacement video to the base mesh reconstructed.

Fig.1

Mesh
Texture
11
12
13
V1 (X1, Y1, Z1)
V2 (X2, Y2, Z2)
V3 (X3, Y3, Z3)
V4 (X4, Y4, Z4)
14
V1, V2, V3
V1, V3, V4
V4, V3, V5
15
16
V1→uv (0, 0)
V2→uv (0.2, 0.4)
V3→uv (0.3, 0.5)
V4→uv (0.4, 0.6)
17

Fig.2

ORIGINAL MESH
DECIMATED MESH
(BASE MESH)
DIVIDED MESH
DISPLACEMENT
VECTOR

# Fig. 3

31

- Vertex list
  V1(x1,y1,z1)
  ...
  V8()x8,y8,z8)
- Trialge list
  T1(v1,v2,v3)
  ...
  T8(v1,v3,v6)
- UV list
  UV1(u1,v1)
  ...
  UV1(u11,v11)
- UV Trialge list
  TT1(uv1,uv2,uv3)
  ...
  TT8(uv6,uv9,uv10)

32

- Vertex list
  V1(x1,y1,z1)
  ...
  V8()x8,y8,z8)
- Trialge list
  T1(v1,v2,v3)
  ...
  T8(v1,v3,v6)
- UV list
  UV1(proj ID1,0)
  ...
  UV1(proj ID2,0)
- UV Trialge list
  TT1(uv1,uv2,uv3)
  ...
  TT8(uv6,uv9,uv10)

33

- patch info
  [projId, orientId, 2dPosX, 2dPosY, 2dSizeX , 2dSizeY, ScaleFlag(, Scale)]
  [projId, orientId, 2dPosX, 2dPosY, 2dSizeX , 2dSizeY, ScaleFlag(, Scale)]
  [projId, orientId, 2dPosX, 2dPosY, 2dSizeX , 2dSizeY, ScaleFlag(, Scale)]
  [projId, orientId, 2dPosX, 2dPosY, 2dSizeX , 2dSizeY, ScaleFlag(, Scale)]

41
AVERAGE EFFECTIVE AREA RATIO:
55.0%
42
AVERAGE EFFECTIVE AREA RATIO:
46.0%
43
AVERAGE EFFECTIVE AREA RATIO:
28.5%

Fig. 4

Fig. 5

51
52

61
62

Fig. 6

Fig. 7

72
71

# Fig.8

Luma Pointcloud-based PSNR
PSNR
Total Rate
81
Luma Pointcloud-based PSNR
PSNR
Total Rate
82

Fig. 9

| | UVAtlas | | | | Updated orthoAtlas | | | |
|---|---|---|---|---|---|---|---|---|
| | Total | Geometry | Textur | Meta | Total | Geometry | Textur | Meta |
| SEQUENCE 1 RATE 1 | 2.28 | 1.38 | 0.89 | 0.004 | 3.09 | 1.13 | 1.82 | 0.138 |
| SEQUENCE 1 RATE 2 | 4.38 | 1.64 | 2.73 | 0.004 | - | - | - | - |
| SEQUENCE 1 RATE 3 | 6.21 | 2.28 | 3.93 | 0.004 | 4.81 | 1.91 | 2.76 | 0.150 |
| SEQUENCE 1 RATE 4 | 8.22 | 2.99 | 5.23 | 0.004 | 6.20 | 2.41 | 3.62 | 0.170 |
| SEQUENCE 1 RATE 5 | 12.29 | 3.67 | 8.63 | 0.004 | 9.49 | 3.09 | 6.23 | 0.170 |
| SEQUENCE 2 RATE 1 | 2.59 | 1.05 | 1.53 | 0.005 | 2.82 | 1.01 | 1.78 | 0.026 |
| SEQUENCE 2 RATE 2 | 5.25 | 2.22 | 3.02 | 0.004 | 5.37 | 2.12 | 3.18 | 0.075 |
| SEQUENCE 2 RATE 3 | 6.42 | 2.39 | 4.02 | 0.004 | 6.62 | 2.29 | 4.25 | 0.075 |
| SEQUENCE 2 RATE 4 | 8.17 | 2.39 | 5.77 | 0.004 | 8.51 | 2.29 | 6.14 | 0.075 |
| SEQUENCE 2 RATE 5 | 13.16 | 4.96 | 8.19 | 0.004 | 12.14 | 4.59 | 7.39 | 0.154 |
| SEQUENCE 3 RATE 1 | 2.05 | 1.20 | 0.85 | 0.004 | 1.83 | 0.99 | 0.75 | 0.085 |
| SEQUENCE 3 RATE 2 | 3.13 | 1.46 | 1.67 | 0.004 | 2.79 | 1.25 | 1.45 | 0.085 |
| SEQUENCE 3 RATE 3 | 6.17 | 2.77 | 3.39 | 0.004 | 5.42 | 2.45 | 2.87 | 0.090 |
| SEQUENCE 3 RATE 4 | 9.18 | 4.01 | 5.17 | 0.004 | 7.91 | 3.50 | 4.32 | 0.100 |
| SEQUENCE 3 RATE 5 | 13.29 | 4.21 | 9.08 | 0.004 | 11.41 | 3.69 | 7.62 | 0.100 |

Fig. 10

| | |
|---|---|
| METHOD 1 | TRANSMIT COMMON PATCH INFORMATION COMMON TO PLURALITY OF FRAMES |
| METHOD 1-1 | TRANSMIT UNIQUE PATCH INFORMATION FOR EACH FRAME |
| METHOD 2 | USE orthoAtlas AND ANOTHER Atlas IN COMBINATION |
| METHOD 2-1 | APPLY orthoAtlas TO ENTIRE TEXTURE, AND APPLY ANOTHER Atlas TO SOME PATCHES |
| METHOD 2-2 | APPLY orthoAtlas TO SOME PATCHES, AND APPLY ANOTHER Atlas TO REMAINING PATCHES |
| METHOD 2-3 | USE IN COMBINATION WITH UVAtlas |
| METHOD 2-4 | ARRANGE SOME TRIANGULAR TEXTURES ACCORDING TO RULE |
| METHOD 2-4-1 | ARRANGE ACCORDING TO PREDETERMINED RULE |
| METHOD 2-4-2 | ARRANGE ACCORDING TO SET RULE |

Fig. 11

114
115
116
110
111
112
113

# Fig. 12

121
131
132
133
141
122
131
134
132
133

# Fig. 13

151
150
(u0, v0)
(u1, v1)
(u2, v2)

Fig. 14

161
160
uv0 (0, 0)
...
uv1 (0, 0.1)
uv2 (0.1, 0.1)

# Fig. 15

181
182
183
171
184
172

Fig. 16

311
PREPROCESSING UNIT
321
MESH DECIMATION UNIT
322
ATLAS INFORMATION GENERATION UNIT
323
DISPLACEMENT VECTOR GENERATION UNIT
312
ENCODING UNIT
ORIGINAL MESH
BASE MESH
DISPLACEMENT VECTOR
ATLAS INFORMATION
ATTRIBUTE MAP
V-DMC BITSTREAM
300

Fig. 17

ATLAS INFORMATION
BASE MESH
DISPLACEMENT VECTOR
ORIGINAL MESH
ATTRIBUTE MAP
ATLAS INFORMATION ENCODING UNIT
351
BASE MESH ENCODING UNIT
352
DISPLACEMENT VECTOR CORRECTION UNIT
353
DISPLACEMENT VIDEO ENCODING UNIT
354
MESH RECONSTRUCTION UNIT
355
ATTRIBUTE MAP CONVERSION UNIT
356
ATTRIBUTE VIDEO ENCODING UNIT
357
MULTIPLEXING UNIT
358
V-DMC BITSTREAM
312

Fig. 18

START ENCODING PROCESSING
DECIMATE ORIGINAL MESH
S301
APPLY orthoAtlas FOR BASE MESH TO GENERATE ATLAS INFORMATION
S302
GENERATE COMMON PATCH INFORMATION AS NECESSARY
S303
GENERATE UNIQUE PATCH INFORMATION AS NECESSARY
S304
GENERATE DISPLACEMENT VECTOR
S305
ENCODE V-DMC DATA
S306
ALL FRAMES PROCESSED?
S307
NO
YES
END

Fig. 19

START ENCODING PROCESSING
ENCODE ATLAS INFORMATION INCLUDING COMMON PATCH INFORMATION
S311
ENCODE BASE MESH
S312
CORRECT DISPLACEMENT VECTORS
S313
ENCODE DISPLACEMENT VIDEO
S314
RECONSTRUCT MESH
S315
GENERATE ATTRIBUTE MAP CORRESPONDING TO orthoAtlas USING ATLAS INFORMATION INCLUDING COMMON PATCH INFORMATION
S316
ENCODE ATTRIBUTE VIDEO
S317
MULTIPLEX EACH ENCODED DATA TO GENERATE BITSTREAM
S318
RETURN

# Fig. 20

START ENCODING PROCESSING
DECIMATE ORIGINAL MESH
S331
APPLY orthoAtlas FOR ENTIRE BASE MESH TO GENERATE ATLAS INFORMATION
S332
APPLY UVAtlas FOR SOME PATCHES OF BASE MESH TO GENERATE ATLAS INFORMATION
S333
GENERATE DISPLACEMENT VECTOR
S334
ENCODE V-DMC DATA
S335
ALL FRAMES PROCESSED?
S336
NO
YES
END

# Fig. 21

START ENCODING PROCESSING
ENCODE ATLAS INFORMATION CORRESPONDING TO orthoAtlas AND UVAtlas
S341
ENCODE BASE MESH
S342
CORRECT DISPLACEMENT VECTORS
S343
ENCODE DISPLACEMENT VIDEO
S344
RECONSTRUCT MESH
S345
GENERATE ATTRIBUTE MAP INCLUDING PATCH CORRESPONDING TO orthoAtlas AND PATCH CORRESPONDING TO UVAtlas USING ATLAS INFORMATION CORRESPONDING TO orthoAtlas AND UVAtlas
S346
ENCODE ATTRIBUTE VIDEO
S347
MULTIPLEX EACH ENCODED DATA TO GENERATE BITSTREAM
S348
RETURN

Fig. 22

START ENCODING PROCESSING
DECIMATE ORIGINAL MESH
S361
APPLY orthoAtlas FOR ENTIRE BASE MESH TO GENERATE ATLAS INFORMATION
S362
GENERATE ATLAS INFORMATION FOR ARRANGING TEXTURE ACCORDING TO RULE FOR SOME TRIANGLES OF BASE MESH
S363
GENERATE DISPLACEMENT VECTOR
S364
ENCODE V-DMC DATA
S365
ALL FRAMES PROCESSED?
S366
NO
YES
END

Fig. 23
START ENCODING PROCESSING
ENCODE ATLAS INFORMATION CORRESPONDING TO orthoAtlas AND TEXTURE REGULAR ARRANGEMENT
S371
ENCODE BASE MESH
S372
CORRECT DISPLACEMENT VECTORS
S373
ENCODE DISPLACEMENT VIDEO
S374
RECONSTRUCT MESH
S375
GENERATE ATTRIBUTE MAP INCLUDING PATCH CORRESPONDING TO orthoAtlas AND TRIANGLE ARRANGED ACCORDING TO RULE, USING ATLAS INFORMATION CORRESPONDING TO orthoAtlas AND TEXTURE REGULAR ARRANGEMENT
S376
ENCODE ATTRIBUTE VIDEO
S377
MULTIPLEX EACH ENCODED DATA TO GENERATE BITSTREAM
S378
RETURN

Fig. 24

V-DMC BITSTREAM
DEMULTIPLEXING UNIT
411
ATLAS INFORMATION DECODING UNIT
412
BASE MESH DECODING UNIT
413
DISPLACEMENT VIDEO DECODING UNIT
416
ATTRIBUTE VIDEO DECODING UNIT
419
BASE MESH RECONSTRUCTION UNIT
414
UNPACKING UNIT
417
SUBDIVISION UNIT
415
DISPLACEMENT VECTOR APPLICATION UNIT
418
DECODING MESH
ATTRIBUTE MAP
DISPLAY PROCESSING UNIT
420
DISPLAY IMAGE
400

Fig. 25

START DECODING PROCESSING
DEMULTIPLEX BITSTREAM
S401
DECODE ATLAS INFORMATION INCLUDING COMMON PATCH INFORMATION
S402
DECODE BASE MESH
S403
RECONSTRUCT BASE MESH USING ATLAS INFORMATION INCLUDING COMMON PATCH INFORMATION
S404
SUBDIVIDE BASE MESH
S405
DECODE DISPLACEMENT VIDEO
S406
UNPACK DISPLACEMENT VECTORS
S407
APPLY DISPLACEMENT VECTORS TO DIVISION POINTS
S408
DECODE ATTRIBUTE VIDEO
S409
APPLY ATTRIBUTE TO DECODING MESH USING ATLAS INFORMATION INCLUDING COMMON PATCH INFORMATION TO GENERATE DISPLAY IMAGE
S410
END

# Fig. 26

START DECODING PROCESSING
DEMULTIPLEX BITSTREAM
S431
DECODE ATLAS INFORMATION CORRESPONDING TO orthoAtlas AND UVAtlas
S432
DECODE BASE MESH
S433
RECONSTRUCT BASE MESH USING ATLAS INFORMATION CORRESPONDING TO orthoAtlas AND UVAtlas
S434
SUBDIVIDE BASE MESH
S435
DECODE DISPLACEMENT VIDEO
S436
UNPACK DISPLACEMENT VECTORS
S437
APPLY DISPLACEMENT VECTORS TO DIVISION POINTS
S438
DECODE ATTRIBUTE VIDEO
S439
APPLY ATTRIBUTE TO DECODING MESH USING ATLAS INFORMATION CORRESPONDING TO orthoAtlas AND UVAtlas TO GENERATE DISPLAY IMAGE
S440
END

# Fig. 27

START DECODING PROCESSING
DEMULTIPLEX BITSTREAM
S461
DECODE ATLAS INFORMATION CORRESPONDING TO orthoAtlas AND TEXTURE REGULAR ARRANGEMENT
S462
DECODE BASE MESH
S463
RECONSTRUCT BASE MESH USING ATLAS INFORMATION CORRESPONDING TO orthoAtlas AND TEXTURE REGULAR ARRANGEMENT
S464
SUBDIVIDE BASE MESH
S465
DECODE DISPLACEMENT VIDEO
S466
UNPACK DISPLACEMENT VECTORS
S467
APPLY DISPLACEMENT VECTORS TO DIVISION POINTS
S468
DECODE ATTRIBUTE VIDEO
S469
APPLY ATTRIBUTE TO DECODING MESH USING ATLAS INFORMATION CORRESPONDING TO orthoAtlas AND TEXTURE REGULAR ARRANGEMENT TO GENERATE DISPLAY IMAGE
S470
END

CPU
901
ROM
902
RAM
903
904
INPUT/OUTPUT INTERFACE
910
INPUT UNIT
911
OUTPUT UNIT
912
STORAGE UNIT
913
COMMUNICATION UNIT
914
DRIVE
915
REMOVABLE MEDIUM
921
900

Fig. 28

## INTERNATIONAL SEARCH REPORT

International application No.
**PCT/JP2024/033413**

**A. CLASSIFICATION OF SUBJECT MATTER**

***H04N 19/597***(2014.01)i; ***G06T 9/00***(2006.01)i; ***H04N 19/46***(2014.01)i; ***H04N 19/85***(2014.01)i
FI: H04N19/597; G06T9/00 100; H04N19/85; H04N19/46

According to International Patent Classification (IPC) or to both national classification and IPC

**B. FIELDS SEARCHED**

Minimum documentation searched (classification system followed by classification symbols)

H04N19/597; G06T9/00; H04N19/46; H04N19/85

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/181875 A1 (SONY GROUP CORPORATION) 28 September 2023 (2023-09-28) entire text, all drawings | 1-20 |
| A | US 2022/0343582 A1 (HEWLETT-PACKARD DEVELOPMENT COMPANY, L. P.) 27 October 2022 (2022-10-27) entire text, all drawings | 1-20 |
| A | KR 10-2461111 B1 (DONGGUK UNIVERSITY INDUSTRY-ACADEMIC COOPERATION FOUNDATION) 31 October 2022 (2022-10-31) entire text, all drawings | 1-20 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/033413**

| Patent document cited in search report | Publication date (day/month/year) | Patent family member(s) | Publication date (day/month/year) |
|---|---|---|---|
| WO 2023/181875 A1 | 28 September 2023 | (Family: none) | |
| US 2022/0343582 A1 | 27 October 2022 | (Family: none) | |
| KR 10-2461111 B1 | 31 October 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KHALED MAMMOU** ; **JUNGSUN KIM** ; **ALEXIS TOURAPIS** ; **DIMITRI PODBORSKI** ; **KRASIMIR KOLAROV**. V-CG] Apple's Dynamic Mesh Coding CfP Response. *ISO/IEC JTC 1/SC 29/WG 7 m59281*, April 2022
- **DANILLO B GRAZIOSI** ; **ALEXANDRE ZAGHETTO** ; **ALI TABATABAI**. VDMC-NEW] orthoAtlas: a new texture mapping proposal for V-DMC. *ISO/IEC JTC1/SC29/WG7 m60982*, October 2022
- **DANILLO BRACCO GRAZIOSI** ; **ALEXANDRE ZAGHETTO** ; **ALI TABATABAI**. V-DMC EE4.8 related] Optimization of orthoAtlas parameters. *SO/IEC JTC1/SC29/WG7 m62560*, April 2023
- **KAO HAYASHI** ; **SATORU KUMA** ; **DANILLO BRACCO GRAZIOSI** ; **OHJI NAKAGAMI**. V-DMC] [EE4. 8-related] Improvement of inter coding performance for orthoAtlas. *ISO/IEC JTC1/SC29/WG7 m64125*, July 2023